# EUROPEAN PATENT APPLICATION

(11) **EP 4 574 418 A1**
(43) Date of publication of application: **25.06.2025**
(21) Application number: 24221486.4
(22) Date of filing: 19.12.2024
(51) Int. Cl.: B32B 7/12, B32B 27/12, B32B 5/02, B32B 27/20, B32B 27/30, B32B 27/32, E04H 4/00

(54) **SHEET, LAMINATED MATERIAL, LAMINATED MATERIAL MANUFACTURING METHOD, INFLATABLE PRODUCT AND ABOVE-GROUND POOL**

(30) Priority: 22.12.2023 CN 202311796589
(71) Applicant: Bestway Inflatables & Material Corp., Shanghai 201812 (CN)
(72) Inventor: ZENG, Xianglin, Nantong City (CN)
(74) Representative: Biggi, Cristina

(57) **Abstract**

A sheet includes a mixture of linear low-density polyethylene and ethylene-vinyl acetate copolymer, the mixture having 15-75 parts by weight of linear low-density polyethylene and 25-85 parts by weight of ethylene-vinyl acetate copolymer. A mass percentage of vinyl acetate in the ethylene-vinyl acetate copolymer of the sheet ranges from 5% to 40%.

## Description

### TECHNICAL FIELD

The present disclosure relates to a laminated material, and more particularly, to a laminated material for use in an inflatable product.

### BACKGROUND

Polyvinyl chloride (PVC) plastic products and PVC film products are widely used in inflatable products. Although PVC materials are widely used and easy to process, PVC products are prone to fracture at low temperatures. Furthermore, PVC raw materials may decompose during processing, producing volatile hazardous substances including hydrogen chloride gas and other dioxins.

Additionally, in order to have sufficient flexibility to be utilized in forming inflatable products plasticizers are often added to the PVC raw materials during processing. However, volatile organic compounds (VOCs) in the plasticizers may cause environmental pollution. Moreover, the plasticizers, which may be harmful to the human body, are easily precipitated from PVC products, such that users of these PVC products may be exposed to the plasticizers. After the plasticizers are precipitated out of the PVC products, the PVC products may also become prone to damage stemming from the reduced flexibility of the products.

### SUMMARY

In the embodiments described herein, linear low-density polyethylene (LLDPE) may be utilized in a laminated material form, such as a sheet, to provide greater strength, better toughness, greater rigidity, and better heat and/or cold resistance compared to PVC, while also providing effective resistance to environmental stress cracking. Moreover, the embodiments of LLDPE described herein do not contain chlorine, such that the LLDPE materials will not decompose to produce chlorine-containing hazardous substances including hydrogen chloride during processing. Accordingly, the LLDPE products described herein will not produce hydrogen chloride, dioxins or other hazardous substances during destruction or degradation.

Furthermore, as will be appreciated in view of the foregoing, LLDPE may not require the addition of plasticizers during processing, thereby avoiding contamination of VOCs. Moreover, since no plasticizer is present, performance of LLDPE products may not be reduced due to the precipitation of plasticizers. As a result, it should be appreciated that the LLDPE material described herein may be a healthier and more environmentally friendly material than PVC.

Furthermore, it will be understood that the LLDPE material described herein may not be processed by high-frequency welding, as the molecules of the LLDPE are not polarized. Accordingly, existing production equipment for PVC products may not be used for production of LLDPE products.

Based on the above findings, in an embodiment of the disclosure, a material is provided. The material comprises 15-75 parts by weight of linear low-density polyethylene and 25-85 parts by weight of ethylene-vinyl acetate copolymer; wherein the mass percentage of vinyl acetate in the ethylene-vinyl acetate copolymer ranges from 5% to 40%.

In an embodiment, the material satisfies one or more of the following conditions: the mass percentage of vinyl acetate in the ethylene-vinyl acetate copolymer is 10%-35%; the linear low-density polyethylene is 20-70 parts by weight, for example, 30-60 parts by weight; the ethylene-vinyl acetate copolymer is 30-80 parts by weight, for example, 40-70 parts by weight; and the material further comprises one or more of an antioxidant, a lubricant and a filler.

In an embodiment, the material satisfies one or more of the following conditions: the antioxidant is 0-1 part by weight, for example, 0.2-0.8 parts by weight; the lubricant is selected from oleamide; the lubricant is 0-1 part by weight, for example, 0.2-0.8 parts by weight; the filler is selected from calcium carbonate nanoparticles; and the filler is 5-25 parts by weight, for example, 5-20 parts by weight.

In an embodiment, the material comprises the following components (in parts by weight): linear low-density polyethylene: 20-70 parts; ethylene-vinyl acetate copolymer: 30-80 parts; antioxidant: 0-1 part; lubricant: 0-1 part.

In an embodiment, the material further comprises a filler: 5-25 parts.

In another embodiment, a sheet comprising any of the materials described above is disclosed.

In another embodiment, a laminated material is disclosed. The laminated material, comprises a fiber layer and a polymer layer. The fiber layer comprises a first side and a second side, wherein the polymer layer is attached to the first side of the fiber layer and comprises any of the sheets described hereinabove.

In an embodiment, the laminated material further comprises an adhesive layer that is disposed between the fiber layer and the polymer layer.

In an embodiment, the adhesive layer comprises polyurethane.

In an embodiment, the laminated material further comprises an intermediate layer disposed between the adhesive layer and the polymer layer, the intermediate layer comprising a hydrocarbon, and the hydrocarbon having 5, 6, 7 or 8 carbon atoms.

In an embodiment, the hydrocarbon comprises an alkane or an olefin.

In an embodiment, the fiber layer comprises a woven fabric.

In an embodiment, the woven fabric is made of synthetic fibers.

In another embodiment of the disclosure, a laminated material is provided. The laminated material comprises: a first fabric layer, comprising a first side and a second side; a second fabric layer, comprising a first side and a second side, wherein the first side of the second fabric layer is disposed opposite the second side of the first fabric layer; a first polymer layer, attached to the first side of the first fabric layer; a second polymer layer, attached to the second side of the second fabric layer; and plurality of threads, each of the plurality of threads being sewn to the first fabric layer and the second fabric layer respectively such that the plurality of threads limit the distance between the first fabric layer and the second fabric layer; wherein the first polymer layer and/or the second polymer layer comprises any of the sheets described above.

In an embodiment, the first fiber layer and the second fiber layer each comprise a woven fabric.

In an embodiment, the woven fabric is made of synthetic fibers.

In an embodiment, the fiber layer comprises a mesh layer, the mesh layer comprising crossed synthetic fibers.

In another embodiment of the present disclosure, a method for manufacturing a laminated material is provided. The method includes the following steps: preparing a polymer layer; preparing a fabric layer; forming an intermediate layer on a first side of the polymer layer, the intermediate layer comprising a hydrocarbon; applying an adhesive to a first side of the fabric layer to form an adhesive layer; and covering a surface of the adhesive layer with the intermediate layer, so that the polymer layer is attached to the fabric layer.

In an embodiment, the step of forming an intermediate layer on a first side of the polymer film includes: preparing a solution, the solution comprising an organic solvent and a hydrocarbon, and the hydrocarbon having 5, 6, 7 or 8 carbon atoms; applying the solution to the first side of the polymer layer; and volatilizing the organic solvent so that an intermediate layer is formed on the first surface by the hydrocarbon.

In an embodiment, the polymer layer is heated to volatilize the organic solvent.

In an embodiment, the organic solvent comprises toluene.

In an embodiment, the hydrocarbon comprises an alkane or an olefin and has 5, 6, 7 or 8 carbon atoms.

In an embodiment, the polymer layer comprises any of the sheets described hereinabove.

In another embodiment an inflatable product is disclosed. The inflatable product comprises a wall that defines an inflatable chamber, wherein the wall comprises any of the sheets or laminated materials described hereinabove.

In an embodiment, the inflatable product refers to an inflatable paddle board, an inflatable pool, an inflatable mattress, or an inflatable toy.

In another embodiment, an above-ground pool is disclosed. The above-ground pool comprises a supporting assembly and a pool body detachably mounted to the supporting assembly and defining a water cavity, wherein the pool body comprises any of the sheets or laminated materials described hereinabove.

As should be appreciated in view of the foregoing, the material made from a mixture of EVA and LLDPE described herein provides low-temperature resistance, weather fastness and durability superior to that of PVC material. Furthermore, the disclosed material contains no chlorine and does not require the addition of plasticizers, such that the material is healthier and more environmentally friendly than existing PVC material. Moreover, the material described herein is adapted to both high-frequency welding and heat fusion processing, such that existing high-frequency welding processing equipment or heat fusion processing equipment may be utilized to produce end products (e.g., inflatable products), and raw materials may be replaced with the material described herein without the need for producers to change processing equipment.

### BRIEF DESCRIPTION OF THE DRAWINGS

Other features and advantages of the present disclosure will be understood from the following embodiments described in detail herein and with reference to the accompanying drawings, in which like reference numerals represent the same or similar components.
FIG. 1 is an illustrative flowchart of a calendering process, according to one or more embodiments shown and described herein;
FIG. 2 is an illustrative flowchart of a film casting process, according to one or more embodiments shown and described herein;
FIG. 3A is a schematic structural diagram of an embodiment of a laminated material, according to one or more embodiments shown and described herein;
FIG. 3B is a perspective view of the laminated material of FIG. 3A, according to one or more embodiments shown and described herein;
FIG. 3C is a schematic structural diagram of an embodiment of a laminated material, according to one or more embodiments shown and described herein;
FIG. 3D is a perspective view of the laminated material of FIG. 3C, according to one or more embodiments shown and described herein;
FIG. 3E is a schematic structural diagram of an embodiment of a laminated material, according to one or more embodiments shown and described herein;
FIG. 3F is a schematic structural diagram of an embodiment of a laminated material, according to one or more embodiments shown and described herein;
FIG. 3G is a schematic structural diagram of an embodiment of a laminated material, according to one or more embodiments shown and described herein;
FIG. 3H is a schematic structural diagram of an embodiment of a laminated material, according to one or more embodiments shown and described herein;
FIG. 3I is a schematic structural diagram of an embodiment of a laminated material, according to one or more embodiments shown and described herein;
FIG. 3J is a schematic structural diagram of an embodiment of a laminated material, according to one or more embodiments shown and described herein;
FIG. 3K is a schematic structural diagram of an embodiment of a laminated material, according to one or more embodiments shown and described herein;
FIG. 3L is a perspective view of an embodiment of a laminated material, according to one or more embodiments shown and described herein;
FIG. 4A is an illustrative flow diagram of an embodiment of a method of manufacturing a laminated material, according to one or more embodiments shown and described herein;
FIG. 4B is an illustrative flow diagram of an embodiment of a method of manufacturing a laminated material, according to one or more embodiments shown and described herein;
FIG. 4C is an illustrative flow diagram of an embodiment of a method of manufacturing a laminated material, according to one or more embodiments shown and described herein;
FIG. 4D is an illustrative flow diagram of an embodiment of a method of manufacturing a laminated material, according to one or more embodiments shown and described herein;
FIG. 5A is a perspective view of an embodiment of a swimming ring, according to one or more embodiments shown and described herein;
FIG. 5B is a perspective view of another embodiment of a swimming ring, according to one or more embodiments shown and described herein;
FIG. 6 is a perspective view of an inflatable mattress, according to one or more embodiments shown and described herein;
FIG. 7 is a perspective view of a paddle board, according to one or more embodiments shown and described herein;
FIG. 8 is a perspective view of an inflatable pool, according to one or more embodiments shown and described herein; and
FIG. 9 is a perspective view of an above-ground pool, according to one or more embodiments shown and described herein.

Other features and advantages of the present disclosure will be understood from the following embodiments described in detail herein and with reference to the accompanying drawings, in which like reference numerals represent the same or similar components.

### DETAILED DESCRIPTION

The implementation and application of embodiments of a sheet, laminated material, inflatable product, above-ground pool, and methods of manufacturing the foregoing will be discussed in detail below.

The present disclosure relates to a material, such as a mixture material, comprising ethylene-vinyl acetate copolymer (EVA) and LLDPE, wherein the ratio of LLDPE to EVA by weight in the material is (15-75) : (25-85).

In these embodiments, when the weight of LLDPE is approximately 15 parts, the weight of EVA may be set to be approximately 25, 30, 35, 40, 45, 50, 55, 60, 65, 70, 75, 80 or 85 parts. When the weight of LLDPE is considered to be approximately 20 parts, the weight of EVA may be set to be approximately 25, 30, 35, 40, 45, 50, 55, 60, 65, 70, 75, 80 or 85 parts. When the weight of LLDPE is considered to be approximately 25 parts, the weight of EVA may be set to be approximately 25, 30, 35, 40, 45, 50, 55, 60, 65, 70, 75, 80 or 85 parts. When the weight of LLDPE is considered to be approximately 30 parts, the weight of EVA may be set to be approximately 25, 30, 35, 40, 45, 50, 55, 60, 65, 70, 75, 80 or 85 parts. When the weight of LLDPE is considered to be approximately 35 parts, the weight of EVA may be set to be approximately 25, 30, 35, 40, 45, 50, 55, 60, 65, 70, 75, 80 or 85 parts. When the weight of LLDPE is considered to be approximately 40 parts, the weight of EVA may be set to be approximately 25, 30, 35, 40, 45, 50, 55, 60, 65, 70, 75, 80 or 85 parts. When the weight of LLDPE is considered to be approximately 45 parts, the weight of EVA may be set to be approximately 25, 30, 35, 40, 45, 50, 55, 60, 65, 70, 75, 80 or 85 parts. When the weight of LLDPE is considered to be approximately 50 parts, the weight of EVA may be set to be approximately 25, 30, 35, 40, 45, 50, 55, 60, 65, 70, 75, 80 or 85 parts. When the weight of LLDPE is considered to be approximately 55 parts, the weight of EVA may be set to be approximately 25, 30, 35, 40, 45, 50, 55, 60, 65, 70, 75, 80 or 85 parts. When the weight of LLDPE is considered to be approximately 60 parts, the weight of EVA may be set to be approximately 25, 30, 35, 40, 45, 50, 55, 60, 65, 70, 75, 80 or 85 parts. When the weight of LLDPE is considered to be approximately 65 parts, the weight of EVA may be set to be approximately 25, 30, 35, 40, 45, 50, 55, 60, 65, 70, 75, 80 or 85 parts. When the weight of LLDPE is considered to be approximately 70 parts, the weight of EVA may be set to be approximately 25, 30, 35, 40, 45, 50, 55, 60, 65, 70, 75, 80 or 85 parts. When the weight of LLDPE is considered to be approximately 75 parts, the weight of EVA may be set to be approximately 25, 30, 35, 40, 45, 50, 55, 60, 65, 70, 75, 80 or 85 parts.

Furthermore, it should be appreciated that, in these embodiments, the ratio of LLDPE to EVA by weight in the above material may be (30-70) : (30-70). For example, when the weight of LLDPE is considered to be approximately 30 parts, the weight of EVA may be set to be approximately 30, 35, 40, 45, 50, 55, 60, 65 or 70 parts. When the weight of LLDPE is considered to be approximately 35 parts, the weight of EVA may be set to be approximately 30, 35, 40, 45, 50, 55, 60, 65 or 70 parts. When the weight of LLDPE is considered to be approximately 40 parts, the weight of EVA may be set to be approximately 30, 35, 40, 45, 50, 55, 60, 65 or 70 parts. When the weight of LLDPE is considered to be approximately 45 parts, the weight of EVA may be set to be approximately 30, 35, 40, 45, 50, 55, 60, 65 or 70 parts. When the weight of LLDPE is considered to be approximately 50 parts, the weight of EVA may be set to be approximately 30, 35, 40, 45, 50, 55, 60, 65 or 70 parts. When the weight of LLDPE is considered to be approximately 55 parts, the weight of EVA may be set to be approximately 30, 35, 40, 45, 50, 55, 60, 65 or 70 parts. When the weight of LLDPE is considered to be approximately 60 parts, the weight of EVA may be set to be approximately 30, 35, 40, 45, 50, 55, 60, 65 or 70 parts. When the weight of LLDPE is considered to be approximately 65 parts, the weight of EVA may be set to be approximately 30, 35, 40, 45, 50, 55, 60, 65 or 70 parts. When the weight of LLDPE is considered to be approximately 70 parts by weight, the weight of EVA may be set to be approximately 30, 35, 40, 45, 50, 55, 60, 65 or 70 parts by weight.

Although the embodiments described herein utilize a ratio of LLDPE to EVA by weight of 30 : 70, it should be further appreciated that, in some embodiments, the material may have a ratio of LLDPE to EVA by weight of approximately 45 : 60.

As provided herein, it should be understood that some mixtures of LLDPE and EVA may be used for property testing of the material described herein. The compositions of these mixtures are listed in Table 1-1 below.

**Table 1-1**

| Number | EVA | LLDPE | Antioxidant | Lubricant |
|---|---|---|---|---|
| Mixture 1 | 80 parts | 20 parts | 0.5 parts | 0.5 parts |
| Mixture 2 | 70 parts | 30 parts | 0.5 parts | 0.5 parts |
| Mixture 3 | 60 parts | 40 parts | 0.5 parts | 0.5 parts |
| Mixture 4 | 50 parts | 50 parts | 0.5 parts | 0.5 parts |
| Mixture 5 | 40 parts | 60 parts | 0.5 parts | 0.5 parts |
| Mixture 6 | 30 parts | 70 parts | 0.5 parts | 0.5 parts |
| Mixture 7 | 20 parts | 80 parts | 0.5 parts | 0.5 parts |
| Mixture 8 | 10 parts | 90 parts | 0.5 parts | 0.5 parts |

As indicated above, the sources of raw materials for the mixtures in Table 1-1 are as follows:
a. EVA particles: Arkema EVA28-03, with vinyl acetate (VA) having a mass percent of 28%; and
b. LLDPE particles: Exxon LLDPE 2012MA.

In the embodiments described herein, and as noted in Table 1.1, it should be appreciated that, the lubricant is used to improve processing properties of the mixture material. Furthermore, the antioxidant in the mixture provides processing stability, and avoids oxidation of the raw materials during processing. It should be understood that known types of antioxidants are suitable for the mixture described herein. Furthermore, oleamide may be selected as a lubricant.

In these embodiments, welding strengths of the sheets made from the mixtures described herein (hereinafter referred to as "mixture sheets" or "sheets") may also be tested separately. For example, to determine welding strength, a series of sheet samples with a width of 10 mm and a thickness of 0.30 mm may be obtained, which, in the embodiments described herein, corresponded to mixture 1 to mixture 8, respectively (e.g., as depicted in Table 1.1).

Based on the same high-frequency welding parameters (welding power: 5 KW, current: 5 A, and welding time: 6 s), the sheet samples corresponding to different mixtures are welded, and the corresponding welding strength is tested and listed in Table 1-2 below. Sample 1 to sample 8 are made from the mixture 1 to the mixture 8, respectively.

**Table 1-2**

| Serial No. | EVA/LLDPE | Width/mm | Thickness/mm | Welding strength/N |
|---|---|---|---|---|
| Sample 1 | 80/20 | 10 | 0.3 | 21.81 |
| Sample 2 | 70/30 | 10 | 0.3 | 21.78 |
| Sample 3 | 60/40 | 10 | 0.3 | 21.74 |
| Sample 4 | 50/50 | 10 | 0.3 | 20.59 |
| Sample 5 | 40/60 | 10 | 0.3 | 20.12 |
| Sample 6 | 30/70 | 10 | 0.3 | 14.01 |
| Sample 7 | 20/80 | 10 | 0.3 | 0 |
| Sample 8 | 10/90 | 10 | 0.3 | 0 |

Based on the test data provided in Table 1-2, it should be appreciated that the welding strength of the sheet samples may correlate to the ratio of EVA to LLDPE in the mixtures. For example, as the content of EVA in each mixture decreases relative to LLDPE, the high-frequency welding strength of the samples deteriorates (e.g., similarly decreases). Furthermore, as illustrated in Table 1-2, the high-frequency welding strength of the samples deteriorates significantly when the mass ratio of EVA to LLDPE is less than 30/70. Moreover, when the mass ratio of EVA to LLDPE is less than 20/80, the samples cannot be subjected to high-frequency welding (e.g., "0 Welding Strength/N" as illustrated in Sample 7 and Sample 8 of Table 1-2).

In order to further verify performances of the above material, the material may be compared with a PVC material. In these embodiments, the Shore hardness of a PVC film used for testing is 85 A, and the formula of its raw materials is shown in Table 1-3 below.

**Table 1-3**

| Raw materials | 1300#PVC powder | Plasticizer DOTP (Dioctyl terephthalate) | Stabilizer | Epoxidized soybean oil |
|---|---|---|---|---|
| Components | 63.2 parts | 33.8 parts | 1 part | 2 parts |

According to the above formula, the PVC film may be obtained by extruding, after which the PVC film may be cut in corresponding sizes as samples of the PVC material. At the same time, a number of sheet samples corresponding to the mixture material may be prepared for comparison with the samples of the PVC material.

In these embodiments, the PVC material samples may be taken from a PVC material roll with a length of 127 mm, a width of 50 mm and a thickness of 0.3 mm, and the length directions of the PVC material samples may be perpendicular to a winding direction of the PVC material roll. Similarly, mixture material samples may be taken from a mixture material roll with a length of 127 mm, a width of 50 mm and a thickness of 0.3 mm, and the length directions of the mixture material samples may be perpendicular to a winding direction of the mixture material roll.

Furthermore, a certain number of the two types of samples (e.g., PVC material samples and mixture material samples) may be obtained. Once the desired number of PVC samples and mixture material samples have been obtained, each of the samples may be subjected to low-temperature brittleness testing. For example, the low-temperature brittleness testing may involve freezing the corresponding samples at temperatures of -10°C and -22°C for 15 min and then observing a number of cracks formed in each of the samples. In these embodiments, if a sample has surface cracks visible to the naked eye at the end of the freezing process, or breaks directly, the sample may be evaluated as a cracked sample.

Test results are shown in Table 1-4 below.

**Table 1-4**

| Material | Temperature/°C | Time/min | Total number of samples | Number of cracks |
|---|---|---|---|---|
| EVA/LLDPE mixture | -10 | 15 | 10 | 0 |
| PVC | -10 | 15 | 10 | 0 |
| EVA/LLDPE mixture | -22 | 15 | 10 | 0 |
| PVC | -22 | 15 | 10 | 10 |

According to Table 1-4, the EVA/LLDPE mixture sheet has low temperature stability superior to the PVC film, as the EVA/LLDPE mixture does not exhibit cracks (e.g., "0" number of cracks) at either -10°C or -22°C, while the PVC film includes at least 10 cracks at -22°C.

In the embodiments described herein, the tensile modulus of the PVC films and the tensile modulus of the mixture sheets in the above formula may also be tested. As described herein, both the PVC films and the mixture sheets may be made into samples with a width of 25 mm and a thickness of 0.3 mm, while each sample (e.g., of the PVC film and the mixture sheet) is tested with an original gauge length of 50 mm, and the speed of the tensile tester is set to 100 mm/min.

### A. Direction parallel to the material roll

**Table 2-1**

| Material | Tensile force corresponding to deformation/N | | | | Maximum tensile force /N | Elongation at break (%) |
|---|---|---|---|---|---|---|
| | 5% | 10% | 30% | 100% | | |
| EVA/LLDPE Mixture | 12.1 | 18.67 | 22.66 | 37.91 | 117.08 | 1164 (maximum stroke unbroken) |
| PVC | 10.38 | 16.38 | 33.71 | 67.17 | 155.33 | 543.78 |

As should be appreciated in view of the foregoing, Table 2-1 provides comparative data for the PVC film and the mixture sheet. For example, as depicted in Table 2-1, when the tensile modulus of the mixture sheet is tested, the direction of tensile force is parallel to a winding direction of the mixture material roll. Similarly when the tensile modulus of the PVC film is tested, the direction of the tensile force is parallel to a winding direction of the PVC material roll.

### B. Direction perpendicular to the material roll

**Table 2-2**

| Material | Tensile force corresponding to deformation/N | | | | Maximum tensile force /N | Elongation at break (%) |
|---|---|---|---|---|---|---|
| | 5% | 10% | 30% | 100% | | |
| EVA/LLDPE Mixture | 11.62 | 18.12 | 24.27 | 29.22 | 71.74 | 1164 (maximum stroke unbroken) |
| PVC | 10.34 | 16.24 | 32.31 | 59.99 | 141.53 | 613.25 |

Additional comparative data for the PVC film and mixture sheet is shown in Table 2-2. In these embodiments, when the tensile modulus of the mixture sheet is tested, the direction of tensile force is perpendicular to the winding direction of the mixture material roll. Similarly, when the tensile modulus of the PVC film is tested, the direction of tensile force is perpendicular to the winding direction of the PVC material roll.

According to Table 2-1 and Table 2-2, it should be appreciated that, compared with the PVC film, the EVA/LLDPE mixture sheet described herein has enhanced tensile properties within a certain range of tensile modulus. For example, with respect to the comparative data in Tables 2-1 and 2-2, in embodiments in which the amount of deformation is within 10%, the mixture sheet described herein has a tensile strength greater than the PVC film. Furthermore, in embodiments in which an amount of deformation is greater than 30%, the tensile strength of the mixture sheet disclosed in the present application is less than that of the PVC film.

Accordingly, it should be understood that, in embodiments in which the amount of deformation is controlled within a certain range (e.g., 10%), the mixture sheet described herein has better low temperature stability and tensile strength as compared with PVC film of the same size.

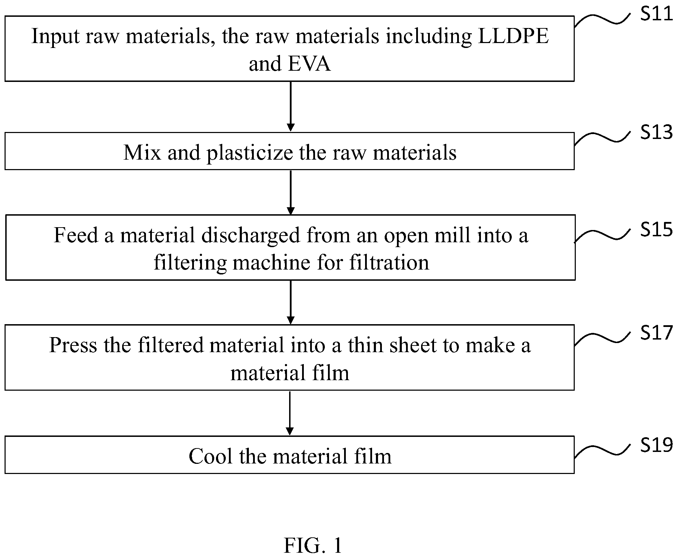

Turning now to the figures, the manufacturing process of the sheet in each of the embodiments discussed hereinabove will be is described in detail below. With reference to FIG. 1, in an embodiment, the sheets corresponding for example to samples 1 to 8 (e.g., as depicted in Table 1-1) may be prepared by a calendering molding process.

As illustrated at block S11, the calendering molding process may initially involve a feeding step. During the feeding step, raw materials, such as LLDPE and/or EVA, may be input into a production line. Furthermore, as shown in Table 1-1, it should be further appreciated that, in some embodiments, the raw materials input into the production line during the feeding step may further include an antioxidant and/or a lubricant. Furthermore, in some embodiments, the raw materials input into the production line may also include an additive to improve properties of the sheet. For example, the raw materials may further include calcium carbonate powder to improve the smoothness of the sheet, and, in turn, the smoothness of a product (e.g., inflatable product) formed using the sheet. In the embodiments described herein, it should be appreciated that the raw materials (e.g., LLDPE and EVA) may be fed into the production line in a powder or granular form.

Once the raw material is input into the production line, the calendering process may advance to block S 13, which may involve plasticizing the raw materials. In these embodiments, the plasticizing step depicted at block S 13 may be used to fully mix the raw materials to form a material with a desired and/or predetermined fluidity, such that the material may be subsequently processed into a sheet, as described herein.

In the embodiments described herein, it should be understood that the step of plasticizing the raw material depicted in block S 13 may include a plurality of sub-steps. For example, initially, the raw materials described herein may be squeezed and/or sheared using an internal mixer, with the internal mixer being used to squeeze and/or shear the raw materials for a desired and/or predetermined period of time (e.g., about 120 seconds). During this process, the raw materials may be mixed while molecules of the raw materials rub against each other to generate heat, thereby causing the raw materials to plasticize. For example, by mixing the raw materials as described herein, the raw materials may be plasticized into a viscous bulk material which is then discharged from the internal mixer.

Subsequently, the plasticizing step depicted at block S13 of FIG. 1 may further involve discharging bulk material from the internal mixer and feeding the bulk material into an open mill. In these embodiments, the bulk material is further plasticized by being further sheared and squeezed by the open mill. For example, the open mill may be provided with two opposing rollers, such that the material is squeezed as it passes through a gap between the two opposing rollers. In some embodiments, the two rollers may rotate in opposite directions and at different speeds, which may enhance the shearing effect on the bulk material fed into the open mill. It should be appreciated that, as the bulk material is fed into the open mill, heat generated by the molecules of the bulk material rubbing against each other during the open milling process may serve to maintain a temperature of the bulk material, and the open mill may further heat the bulk material to prevent the material from cooling or solidifying. In these embodiments, it should be understood that the open milling process may be completed using a single open mill or a plurality of mills without departing from the scope of the present disclosure.

For example, in embodiments, the production line may be provided with two open mills, such as first open mill A and second open mill B (not depicted). In these embodiments, the first open mill A may have a first operating temperature, such as a first operating temperature set to 70°C, and the temperature of the material when discharged from the first open mill A may have a first discharge temperature, such as a first discharge temperature of 120°C. Furthermore, the operating temperature of the second open mill B may have a second operating temperature, such as a second operating temperature set to 50°C, and the temperature of the material when discharged from the second open mill B may have a second discharge temperature, such as a second discharge temperature of 125°C.

Although the embodiments described herein include two rollers utilized for squeezing the bulk material, it should be further understood that, in some embodiments, there may be more than two rollers used for squeezing the bulk material in one internal mixer. Furthermore, these rollers may include various arrangement in the various embodiments described herein.

Referring still to FIG. 1, once the raw material has been plasticized, the calendering process may further include filtering the material, as shown at block S15. For example, when a material with impurities is produced as a sheet (in particular, a thin sheet), the impurities may form defects on the sheet. In the case that the defective sheet is used in the manufacture of an inflatable product, the inflatable product may be prone to failing (e.g., breaking, etc.) at and/or along a location of the defects. In other words, these impurities may cause quality problems in the final product.

In order to remove these impurities which are formed in the material during the manufacturing process, the material from the open mill may be fed into a filtering machine for filtration, as is shown at block S15. In these embodiments, the filtering machine may squeeze and shear the material for further plasticization of the material. As has been described hereinabove, the squeezing and shearing performed by the filtering machine may act to heat the material to promote the plasticization of the material. For example, with the first operating temperature of the filtering machine set to 93°C and a mesh number (i.e., number of meshes in a 1 inch square) of a filter screen set to 120, the temperature of the filtered material may be raised to approximately 130°C. However, it should be understood that the operating temperature of the filtering machine and/or the mesh number of the filter screen may be set to any other value without departing from the scope of the present disclosure.

Furthermore, in some embodiments, it should be appreciated that the filtering step depicted at block S15 may be omitted entirely. For example, in the event that the material discharged from the open mill does not contain impurities that would cause quality problems in the final product (e.g., inflatable product), the filtering step depicted at block S15 of FIG. 1 may be omitted to increase productivity.

As further illustrated in FIG. 1, the filtered material may then be fed into a calendering machine, as depicted at block S17. In these embodiments, the calendering machine may include a plurality of rollers, with the filtered material being squeezed by the plurality of rollers and stretched into a sheet as it traverses the calendering machine. For example, the plurality of rollers of the calendering machine may include at least one pair of rollers between which the material is squeezed into a sheet, with the thickness of the sheet depending on a size of a gap between the pair of rollers. Furthermore, in some embodiments, the pair of rollers may also heat the filtered material, such that reduction of plasticity due to gradual cooling is avoided.

It should be further appreciated that, in a particular embodiment, the calendering machine may be a four-roller calendering machine having four rollers for squeezing the filtered material fed into the calendering machine. In this embodiment, the four rollers may include two pairs of rollers. For example, the first pair of rollers R1, R2 have temperatures of 105°C, and the second pair of rollers R3, R4 have temperatures of 110°C and 105°C, respectively. In the embodiment described herein, the material may pass through the first and second pairs of rollers sequentially to achieve a desired thickness. Although the calendering machine described herein may include at least one or two pairs of rollers, it should be understood that there may be more or less than two pairs of rollers for squeezing the bulk material in the calendering machine, and these rollers may be arranged in different ways in different embodiments.

Referring still to FIG. 1, once the filtered material is passed through the calendering machine, the sheet is cooled and ready for use in subsequent production processes, as shown at block S19. For example, the sheet output from the calendering machine may be cooled down after passing through cooling rollers at a low temperature, and the cooling rollers may be introduced with a coolant.

In some embodiments, before the step of cooling the sheet is carried out, the sheet may be embossed such that an anti-slip property of the sheet is improved. For example, a liquid-silicone wheel may be used to press the surface of the sheet to form a desired embossed pattern. Accordingly, in some embodiments, one or both sides of the sheet may include an embossed pattern. It should be appreciated that the embossing described herein may be applied to any of the embodiments of the present disclosure.

Moreover, traditional embossing methods may utilize a common ethylene propylene diene monomer (EPDM) wheel that may be easily adhered to the sheet. However, the liquid-silicone wheel described herein may be more easily separated from the sheet. Accordingly, the liquid-silicone wheel described herein may be used to reduce adhesion of an embossing wheel to the sheet, thereby improving the production efficiency of the sheet.

In view of the foregoing, it should be appreciated that the above disclosure describes in detail a process of manufacturing a sheet by a calendering process. However, it should be further understood that the sheet may be obtained via other processes in other embodiments, as will be described in additional detail herein.

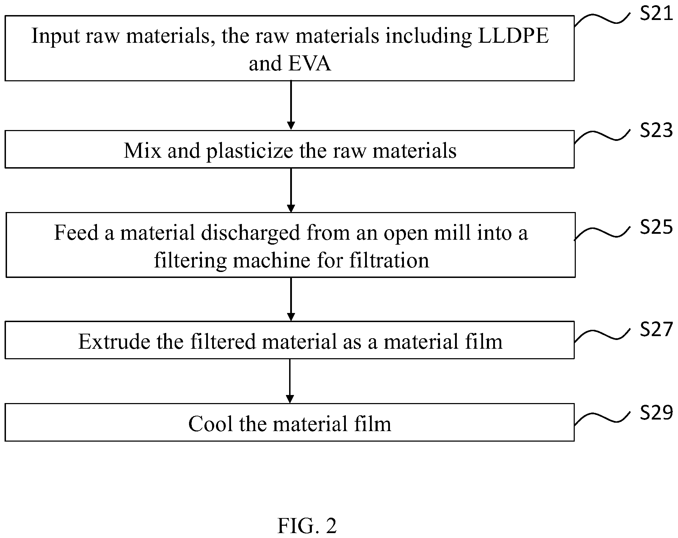

For example, with reference now to FIG. 2, the sheet may be prepared by a film casting process. In these embodiments, the film casting method may be implemented by means of a film casting machine, and may include at least the steps of feeding, plasticizing, filtering, extruding, and cooling, as illustrated at blocks S21, S23, S25, S27, and S29, respectively, of FIG. 2, and as will be described in additional detail herein.

Initially, it should be appreciated that the feeding, plasticizing, filtering and cooling steps illustrated at blocks S21, S23, S25, S29 of FIG. 2 may be the same or substantially the same as steps performed at blocks S11, S13, S15 and S19 described above, respectively, and are incorporated herein by reference. However, block S27 of FIG. 2 differs from block S17 of FIG. 1 described above in that, instead of stretching a sheet through a plurality of rollers, the filtered material in block S27 is pressurized and fed into a molding die. Once the filtered material is fed into the molding die, the material may then be extruded from a narrow "slit-like" outlet of the molding die, at which point the extruded material is extended and stretched to form a sheet having a desired thickness.

In view of the foregoing, it should be appreciated that FIGS. 1 and 2 depict some methods that may be used for manufacturing a sheet. However, these descriptions are exemplary in nature. Accordingly, it should be understood that any methods in which a mixture comprising LLDPE and EVA is made to form a sheet having a desired thickness can be used to produce a sheet suitable for use in various embodiments of the present disclosure.

It should be further understood that the ratio of EVA to LLDPE in each of the embodiments described herein is exemplary in nature, such that any desired ratio of EVA to LLDPE may be utilized as may be necessitated under various circumstances. For example, in an embodiment, the ratio of EVA to LLDPE by mass is about 75 to 25. However, the ratio of EVA to LLDPE may be about 80 - 30, 80 - 25, 70 - 25, 70 - 30, or any other similar ratio without departing from the scope of the present disclosure.

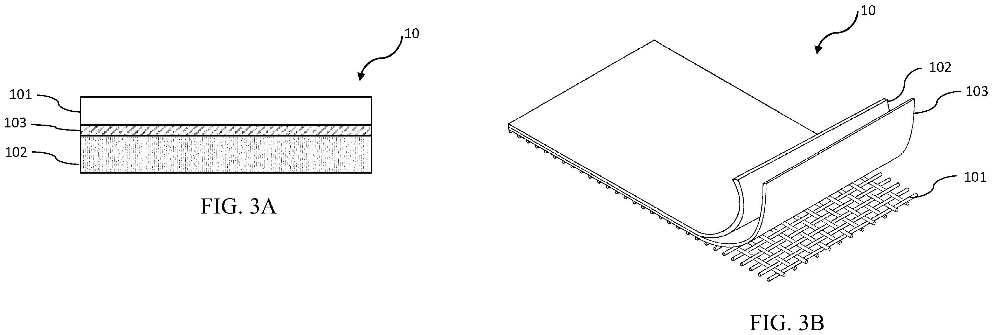

Referring now to FIGS. 3A-3L, and based on the mixture sheet described herein, a laminated material may also be manufactured. For example, in these embodiments, an anti-tensile material, attached to one or both sides of the mixture sheet may aid in limiting the deformation of the mixture sheet when the sheet is subjected to a tensile force, such that the reliability of the sheet may be retained.

For example, with reference now to FIGS. 3A and 3B, a laminated material 10 may include a fiber layer 101 and a polymer layer 102 laminated to one another. In these embodiments, the polymer layer 102 may be made from a mixture containing LLDPE and EVA. For example, the polymer layer 102 may be made of a sheet made from the mixture containing LLDPE and EVA as provided in any of the embodiments described hereinabove (e.g., with reference to FIGS. 1 and 2).

As further depicted in FIGS. 3A and 3B, the fiber layer 101 in each embodiment may be formed from a series of parallel or substantially parallel fibers or threads arranged at constant or inconstant intervals from each other. Alternatively, the fiber layer 101 may also be formed from a planar or three-dimensional fabric material composed of interwoven fibers or threads. For example, in some embodiments, the fiber layer 101 may be formed of a mesh material or cloth. In these embodiments, the material of these fibers or threads may be selected from, but not limited to, the following synthetic fiber materials: polyethylene terephthalate (PET) fibers; polyacrylonitrile (PAN) fibers; nylon fibers; and/or ultra-high molecular weight polyethylene fibers (UHMWPEF). However, it should be further appreciated that the fibers and/or threads described herein may also be made of other materials (e.g., but not limited to, cotton).

Referring still to FIGS. 3A and 3B, the fiber layer 101 may be woven by a plurality of fibers. In these embodiments, the fiber layer 101 may be woven by the plurality of fibers such that a sum number of warps and wefts per square inch may be greater than 100, and the fibers in the warp direction may have a different weight per unit length than the fibers in the weft direction. In other embodiments, it should be appreciated that the sum number of warps and wefts per square inch in the fiber layer 101 may be less than 100. It can also be understood that in some embodiments, the fibers in the warp direction may have the same weight per unit length as that of the fibers in the weft direction without departing from the scope of the present disclosure.

As further illustrated in FIGS. 3A and 3B, the fiber layer 101 may also be provided with holes distributed across the fiber layer 101. For example, in some embodiments, the fiber layer 101 may be composed of crossed synthetic fibers, which may be selected from any of the fibers and/or threads mentioned above, along with any of the other materials described herein (e.g., but not limited to, cotton).

As depicted most clearly in FIG. 3B, the crossed fibers or threads in the fiber layer 101 form the holes described above. For example, the fiber layer 101, may be formed from a number of interwoven or cross-laminated warp and weft threads, where the warp threads may be disposed parallel to each other, the weft threads may be disposed parallel to each other, and the warp threads and the weft threads may be perpendicular to each other respectively. Accordingly, it should be appreciated that, as illustrated in FIG. 3B, the holes formed in the fiber layer 101 may be uniformly distributed across the fiber layer 101.

Referring still to FIGS. 3A and 3B, it should be further understood that, in embodiments, the fiber layer 101 may be constructed in other ways from the fibers or threads mentioned above. For example, these fibers or threads are woven to form the fiber layer 101, and the fiber layer includes holes that are substantially circular, hexagonal, or otherwise shaped. In these embodiments, it should be appreciated that the construction of the fiber layer 101 may result in holes being formed in the fiber layer 101 which are non-uniformly distributed without departing from the scope of the present disclosure.

Referring again to FIGS. 3A - 3L, it should be understood that the mixture of LLDPE and EVA described herein may include a desired polarity that is adapted to processing in a high-frequency welding manner, and that the polarity of the EVA is provided by a vinyl acetate (VA) group therein, such that the higher the VA content of an EVA, the better the high-frequency welding performance of the polymer layer 102 formed by the mixture of the LLDPE and that EVA. However, it should be noted that that excessive VA content may result in an EVA (and its mixture with LLDPE) that is too viscous, which may result in the polymer layer 102 being too viscous, and inconveniencing the production of the polymer layer 102. Accordingly, in some embodiments, an EVA with a moderate VA content may be selected to achieve a balance between the ease of production of the polymer layer 102 and its high-frequency welding performance. For example, in some embodiments, the content of VA in the EVA may be controlled between 5% and 40%. In other embodiments, the content of VA in the EVA may be controlled between 10% and 35%. Furthermore, it should be understood that the content of the VA in the EVA may be controlled as desired for a particular application without departing from the scope of the present disclosure.

Referring now to FIGS. 3A and 3B, to ensure that the fiber layer 101 and the polymer layer 102 are tightly bonded, an adhesive layer 103 may also be provided between the fiber layer 101 and the polymer layer 102. For example, the fiber layer 101 may be coated with a first layer of adhesive, after which the polymer layer 102 and the fiber layer 101 with the first layer of adhesive may be heated. In these embodiments, the side of the fiber layer with the first layer of adhesive may be pressed against the polymer layer 102, such that the adhesive from the first layer of adhesive fills the gap between the fiber layer 101 and the polymer layer 102 to form the adhesive layer 103. It should be understood that, in the embodiments described herein, in order to attach the fiber layer 101 to the polymer layer 102, the adhesive may also be coated on the polymer layer 102, or coated on both the fiber layer 101 and the polymer layer 102, rather than only being coated on the fiber layer 101. However, regardless of the layer on which the adhesive is initially disposed, it should be appreciated that, in each of the embodiments described herein, the adhesive layer 103 is subsequently formed between the polymer layer 102 and the fiber layer 101 that are pressed together.

In the embodiments described herein, after the polymer layer 102 is attached to the fiber layer 101, the polymer layer 102 may be embedded in the holes distributed in the fiber layer 101, such that the polymer layer 102 and the fiber layer 101 are tightly bonded. For example, the embedded depth of the fiber layer 101 in the polymer layer may range from 0.06 mm to 0.1 mm, or the embedded depth of the fiber layer 101 embedded in the polymer layer may include any other similar range of depths. Furthermore, the thickness of the polymer layer 102 may range from 0.15 mm to 0.9 mm, or any other similar thickness as may be necessitated by a particular application of the sheet.

It should be understood that, in these embodiments, the term "adhesive" may refer to a PU adhesive. For example, the PU adhesive may first be diluted into a low-concentration PU adhesive solution, and a curing agent may be added to facilitate the drying and curing of the PU adhesive. In these embodiments, once the PU adhesive solution is dried and cured, the solution may be applied to the fiber layer 101 and/or the polymer layer 102. Further, the viscosity of the undiluted PU adhesive is between 35000 CPS and 100000 CPS, or within any similar range without departing from the scope of the present disclosure.

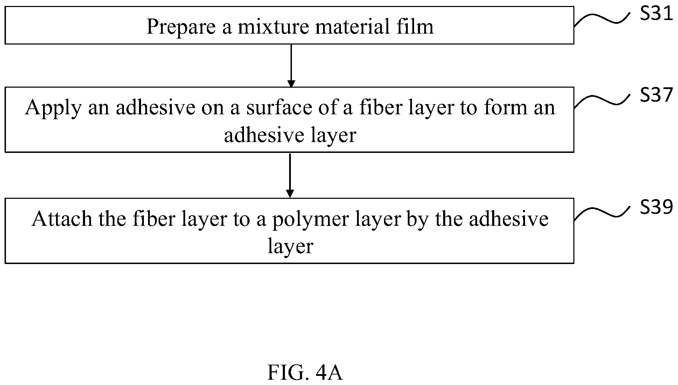

Turning now to FIG. 4A, a method of preparing a laminated material 10 is illustrated and described. For example, as shown in FIG. 4A, the method may initially involve preparing a mixture sheet which serves as a polymer layer 102, as is depicted at block S31.

With the mixture sheet prepared, the method may advance to block S37, which may involve applying an adhesive to a side of a fiber layer 101 (e.g., the PU adhesive solution described above), such that the adhesive forms an adhesive layer 103. In these embodiments, it should be appreciated that the fiber layer may be a fabric material (e.g., oxford cloth), as has been described hereinabove.

Referring still to FIG. 4A, after the adhesive layer 103 is formed, the method may advance to block S39, which may involve attaching the fiber layer 101 to the polymer layer 102 through the adhesive layer 103. In these embodiments, it should be understood that the mixture sheet forms the polymer layer 102 of the laminated material 10, the adhesive (e.g., after the solvent is volatilized) forms the adhesive layer 103 of the laminated material 10, and the fabric material forms the fiber layer 101 of the laminated material 10. Although not depicted in FIG. 4A, it should be further appreciated that, in some embodiments, before the method step of block S37 is performed, the mixture sheet (i.e., the polymer layer 102) may be unfolded and preheated to promote a tight bonding between the adhesive and the polymer layer 102.

As noted hereinabove, the method of block S39 in FIG. 4A may include attaching the fiber layer 101 to the polymer layer 102 via the adhesive layer 103. In some embodiments, the method of block S39 may further involve covering the mixture sheet on the side of the fabric material coated with the adhesive, and then applying a pressure to the surfaces of the mixture sheet and the fabric material to firmly bond the two through the adhesive. As noted hereinabove, in these embodiments, the fabric material may be heated and then attached to the mixture sheet to promote a tight bonding between the adhesive and the polymer layer 102.

Although the methods described above may be used for forming the laminated material 10, and the laminated material 10 made by the methods described above, it should be further understood that the methods and laminated materials described herein may be adapted to various other embodiments without departing from the scope of the present disclosure.

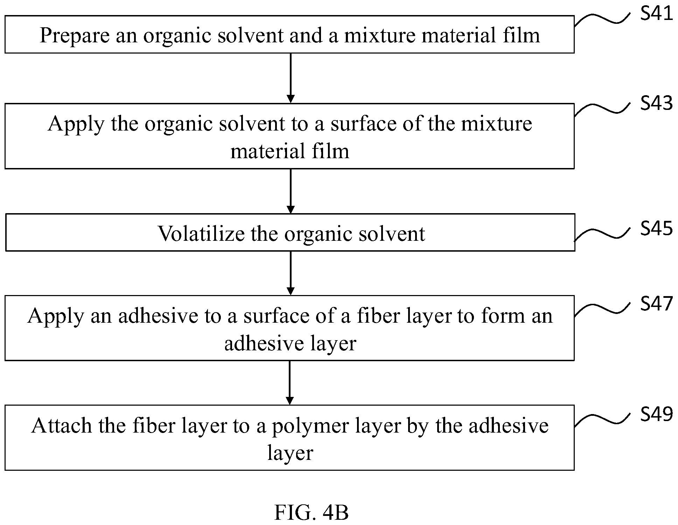

Referring now to FIG. 4B, it should be appreciated that, in general, when forming a laminated material, contact between the polymer layer and an organic solvent should be avoided, as the organic solvent (e.g., toluene) maybe corrosive to polymeric materials. However, in the process of improving the laminated material described above, utilization of an organic material may aid in enhancing the bonding between the adhesive layer and the polymer layer, as will be described in additional detail herein.

For example, in embodiments of the present disclosure, use of an organic solvent may wash away the lubricant seeping from the surface of the polymer layer 102, thereby reducing the adverse effect of the lubricant on the bonding between the adhesive layer and the polymer layer. Furthermore, in these embodiments, the organic solvent may slightly damage the surface of the mixture sheet (e.g., the polymer layer 102), which may cause swelling of the surface of the polymer layer. Such damage may cause the surface of the polymer layer 102 to be rougher than its original state, such that the polymer layer 102 is able to come into contact with the adhesive more sufficiently, and the bonding between the adhesive layer and the polymer layer is stronger than expected.

In view of the foregoing, and as depicted in FIG. 4B, it should be appreciated that the method of forming a laminated material (e.g., as described hereinabove with reference to FIG. 4A) may further comprise additional steps that utilize an organic solvent to enhance the bond between the adhesive layer and the polymer layer.

For example, as shown in FIG. 4B, the method may further involve the step of preparing an organic solvent and a mixture sheet (i.e., the polymer layer 102), as shown at block S41. In these embodiments, the organic solvent may be, but is not limited to, one of, or a mixture of, benzene, toluene, xylene, vinyl chloride, trichloroethylene, cyclohexane, acetone, and any other similar compound.

With the organic solvent prepared, the method may advance to block S43, which may involve coating a surface of the mixture sheet (i.e., the polymer layer 102) with the organic solvent. In these embodiments, the method may also involve volatizing the organic solvent, as depicted at block S45, which may simply involve allowing the coating surface to rest on the mixture sheet in order to volatilize the organic solvent present in the coating surface.

Referring still to FIG. 4B, once the organic solvent is volatized, the method may advance to block S47, which may involve applying an adhesive (e.g., the PU adhesive solution described above) to a side of a fabric material (e.g., oxford cloth) or other type of fiber layer material, with the adhesive being used to form an adhesive layer on the laminated material 12. For example, as described hereinabove, the adhesive (or a solution thereof) may be applied to one surface of the fabric material or other type of fibrous material layer, thereby forming the adhesive layer on that surface. In other embodiments, it should be further appreciated that the fabric material or other type of fibrous material layer may be immersed in a liquid or semiliquid adhesive (or a solution thereof), in order to form the adhesive layer on both sides of the fabric layer (or other type of fibrous material layer).

As further depicted in FIG. 4B, the method may further involve bonding the intermediate layer 104 and the adhesive layer 103, as shown at block S49. In these embodiments, the mixture sheet (e.g., the polymer layer 102) may cover the side of the fabric material coated with the adhesive, and a pressure may be applied to each of the surfaces of the mixture sheet and the fabric material to cause the mixture sheet and the fabric material to be firmly bonded by means of the adhesive. Accordingly, it should be understood that the mixture sheet forms the polymer layer 102 of the laminated material 10, the adhesive (e.g., after the solvent is volatilized) forms the adhesive layer 103 of the laminated material 10, the fabric material forms the fiber layer 101 of the laminated material 10, and the intermediate layer 104 is located between the adhesive layer 103 and the polymer layer 102. As has been described hereinabove, it should also be understood that, in these embodiments, the fabric material may be heated before being attached to the mixture sheet. Similarly, in embodiments in which heat is applied, the organic solvent may be rapidly volatilized by heating the polymer layer 102.

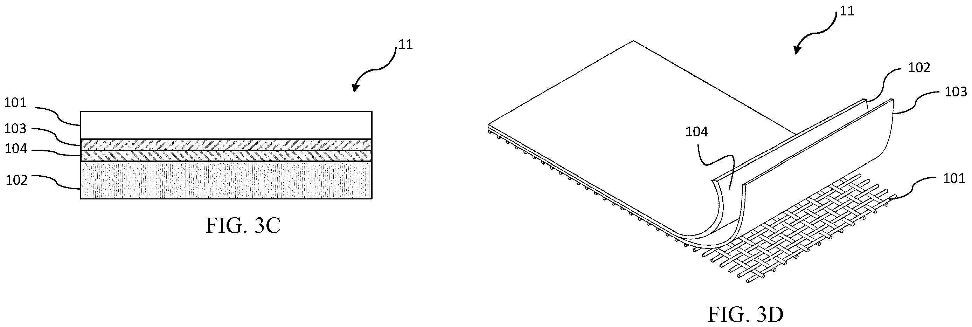

Referring now to FIGS. 3C and 3D, in some embodiments, a laminated material 11 may further include an intermediate layer 104 between the polymer layer 102 and the adhesive layer 103. In these embodiments, the intermediate layer 104 may include a hydrocarbon such as an alkane, an olefin, and/or an aromatic hydrocarbon, as these compounds may easily bond with the polymer layer 102 and the adhesive layer 103 (e.g., the PU adhesive), respectively, thereby increasing the bonding force between the polymer layer 102 and the adhesive layer 103, enhancing the bonding strength between the adhesive layer 103 (e.g., PU adhesive) and the polymer layer 102, and preventing the polymer layer 102 from peeling off from the fiber layer 101. Furthermore, it should be appreciated that, in other embodiments, the intermediate layer 104 may also include other types of organic compounds (e.g., but not limited to, alcohols, ethers), and the adhesive layer 103 may be formed from other types of adhesives. For example, it should be understood that any organic compound may be used to form the intermediate layer 104 as long as the organic compound may easily bond with the polymer layer 102 and the adhesive layer 103, respectively. Accordingly, the intermediate layer 104 may be formed between the adhesive layer 103 and the polymer layer 102 to enhance the resistance strength of the laminated material 11 before the fiber layer 101 is attached to the polymer layer 102.

In the embodiments described herein, a number of carbon atoms of the hydrocarbon of the intermediate layer 104 may be 4 to 20 carbon atoms. For example, the number of carbon atoms of the hydrocarbon may be 5, 6, 7 or 8. In embodiments in which the intermediate layer 104 comprises alkanes, these alkanes may include, but are not limited to, straight chain alkanes, branched chain alkanes, and monocyclic alkanes. Similarly, in embodiments in which the intermediate layer comprises olefins, these olefins may include, but are not limited to, mono-olefins or diolefins. In embodiments in which the intermediate layer comprises aromatic hydrocarbons, these aromatic hydrocarbons may include, but are not limited to, benzene and/or alkylbenzenes similar to toluene or xylene.

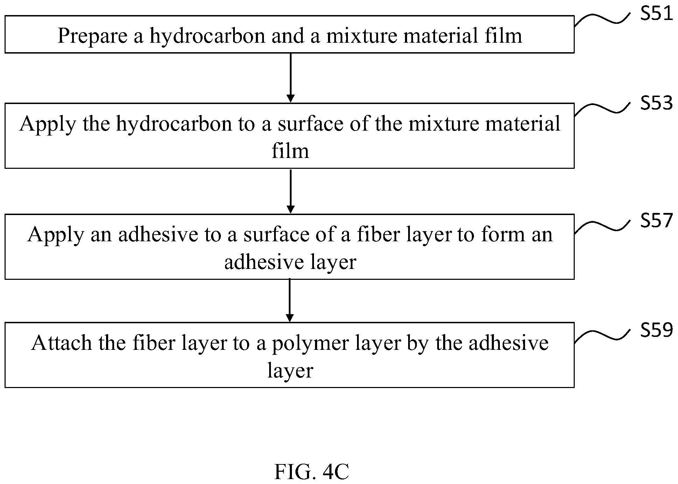

Turning now to FIGS. 3C, 3D, and 4C, the method described hereinabove for forming a laminated material as provided in FIGS. 1 and 2 may also include additional steps for providing the intermediate layer 104 described hereinabove. For example, as depicted most clearly in FIG. 4C, in some embodiments, the method may further involve preparing a hydrocarbon and a mixture sheet (e.g., polymer layer 102), as illustrated at block S51.

With the hydrocarbon and mixture sheet prepared, the method may advance to block S53, which may involve coating a surface of the mixture sheet (e.g., the polymer layer 102) with the hydrocarbon to form the intermediate layer 104. In these embodiments, the method may further include applying an adhesive (e.g., PU adhesive solution described above) to a surface of a fabric material (e.g., oxford cloth) or other type of fiber layer material, as shown at block S57, with the adhesive being used to form the adhesive layer of the laminated material 12.

Referring still to FIG. 4C, and as illustrated in FIGS. 3C and 3D, the intermediate layer 104 and the adhesive layer 103 may be bonded to one another, as shown at block S59. For example, the mixture sheet (e.g., the polymer layer 102) may cover the side of the fabric material coated with the adhesive, and a pressure may be applied to the each of the surfaces of the mixture sheet and the fabric material to cause the mixture sheet and the fabric material to be firmly bonded by means of the adhesive. Accordingly, it should be understood that, in these embodiments, the mixture sheet forms the polymer layer 102 of the laminated material 11, the adhesive (e.g., after the solvent is volatilized) forms the adhesive layer 103 of the laminated material 11, the fabric material forms the fiber layer 101 of the laminated material 11, and the intermediate layer 104 is located between the adhesive layer 103 and the polymer layer 102. Furthermore, as described hereinabove, the fabric material is heated before being attached to the mixture sheet.

In the embodiments described herein, it should be further noted that naphtha, a common and inexpensive chemical raw material, is composed primarily of a series of straight-chain alkanes and monocyclic alkanes, and further contains a small number of other organic compounds (e.g., bicyclic alkanes, and alkylbenzenes), with the major component being alkanes having 5 to 7 carbon atoms. Accordingly, in some embodiments, naphtha may be coated on the surface of the mixture sheet (i.e., the polymer layer 102) as the hydrocarbon in the step depicted in block S53 of FIG. 4C, thereby realizing desirable control of production costs.

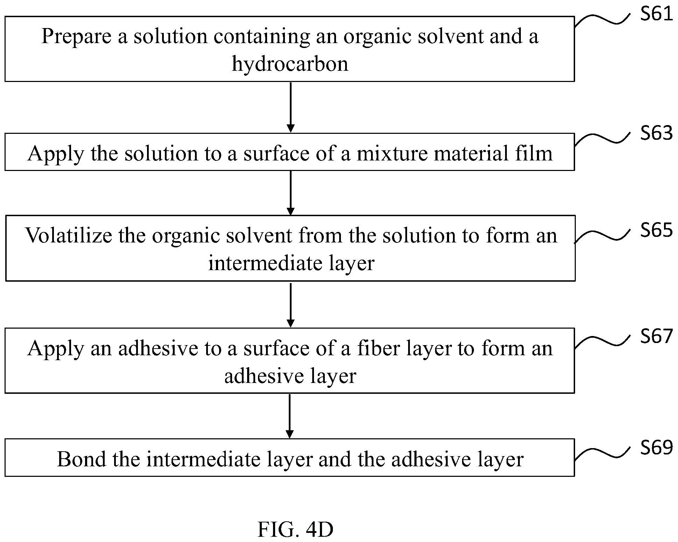

Although naphtha may allow for desirable control of production costs, as described herein, it should be noted that, in some instances, a thickness of the naphtha coating may be adverse to the uniform application of the adhesive of the adhesive layer 103. For example, the thickness of the naphtha layer may become problematic in embodiments in which the naphtha is directly coated on the surface of the mixture sheet. Accordingly, in some embodiments, the method may further include additional steps designed to resolve issues stemming from excessively thick naphtha coating, as shown in FIGS. 3C, 3D, and 4D.

For example, as provided most clearly in FIG. 4D, the method may further involve preparing a solution of naphtha, with the solvent of the solution being an organic solvent, as shown at block S61. In these embodiments, the organic solvent may include, but is not limited to, benzene, toluene, xylene, vinyl chloride, trichloroethylene, cyclohexane, acetone, etc. or a mixture.

With the naphtha solution prepared, the method may advance to block S63, which may include coating a surface of the mixture sheet (i.e., the polymer layer 102) with the solution.

In these embodiments, the solution which is used to coat the surface of the mixture sheet may be allowed to rest on the mixture sheet for a predetermined period of time, such that the organic solvent in the above solution is allowed to volatilize, as provided at block S65. In these embodiments, it should be appreciated that, as the naphtha volatizes, at least a portion of the naphtha that is dispersed in the organic solvent remains on the surface of the polymer layer 102 and forms an intermediate layer 104.

Referring still to FIG. 4D, once the intermediate layer is formed (e.g., as described above with reference to block S65), an adhesive (e.g., PU adhesive solution described above) may be applied to a surface of a fabric material (e.g., oxford cloth) or other type of fiber layer material, as depicted at block S67. In these embodiments, and as described in detail hereinabove, the adhesive may be used to form an adhesive layer of the laminated material 12.

With the adhesive layer 103 formed, the method may finally advance to block S69, which may involve bonding the intermediate layer 104 and the adhesive layer 103. For example, the mixture sheet (i.e., the polymer layer 102) may cover the side of the fabric material coated with the adhesive, and a pressure is applied to each of the surfaces of the mixture sheet and the fabric material to cause the mixture sheet and the fabric layer to be firmly bonded by means of the adhesive. Accordingly, it should be understood that the mixture sheet forms the polymer layer 102 of the laminated material 11, the adhesive (e.g., after the solvent is volatilized) forms the adhesive layer 103 of the laminated material 11, the fabric material forms the fiber layer 101 of the laminated material 11, and the intermediate layer 104 is located between the adhesive layer 103 and the polymer layer 102. As noted hereinabove, the fabric material may also be heated before being attached to the mixture sheet.

In view of the foregoing, it should be understood that, by performing the steps described hereinabove with reference to FIG. 4D, the concentration of naphtha in the naphtha coating on the surface of the mixture sheet (i.e., the polymer layer 102) is reduced. Therefore, the naphtha may form a uniform and thin intermediate layer 104 on the surface of the polymer layer 102 after volatilization of the organic solvent. Moreover, as described above, the organic solvent, may wash away the lubricant seeping from the surface of the polymer layer 102, and may make the surface of the polymer layer 102 rougher than the original state. As a result, the organic solvent may facilitate a strong bonding between the adhesive layer and the polymer layer.

It should be understood that the steps performed hereinabove with reference to FIG. 4D are merely an exemplary way of forming a suitable naphtha coating on the surface of the polymer layer 102. Other techniques capable of forming a suitable naphtha coating on the surface of the polymer layer 102 may also be applied in embodiments of the present disclosure to produce the laminated material. For example, in some embodiments, the surface of the polymer layer 102 may be covered with naphtha by spraying, or any other similar coating method, without departing from the scope of the present disclosure. Similarly, in some embodiments, the organic solvent may be rapidly volatilized by heating the polymer layer 102.

Referring collectively to FIGS. 1 - 4D, it should be noted that the properties of the laminated material described hereinabove may be verified via various testing. For example, in an initial test of a property of the laminated material, a sample 9 was prepared. In this embodiment, a PU adhesive with a viscosity of 85000 CPS (25°C) was selected. During use, this PU adhesive was first diluted to obtain a lower-concentration PU adhesive solution, and a curing agent was added to promote drying and curing, where the mass ratio of the PU adhesive to the curing agent to the solvent was 100: 13 : 10, so as to obtain a PU adhesive solution with a viscosity of about 34000 CPS (25°C).

In the test embodiment, the fiber layer 101 was made of nylon cloth (70D/210D). The PU adhesive solution described above was applied to a surface of the nylon cloth at 40 g/m2 at an ambient temperature of 160°C, where the surface temperature of rollers used to convey the nylon cloth was 170°C. The running speed of the nylon cloth was about 7 m/min. Furthermore, the polymer layer 102 was selected from a mixture sheet having the same parameters as the sample 3 in Table 1-2.

The mixture sheet utilized in the test embodiment (e.g., using Sample 9 as described herein) was attached to the nylon cloth, where the side facing toward the nylon cloth was an attaching side of the mixture sheet. The mixture sheet and the nylon cloth were pressed at 55 kgf/cm2 and heated respectively. The heating temperature of the mixture sheet is 160°C, the heating temperature of the nylon cloth is 105°C, and the running speed of the rollers on the surface of the laminated material was about 8 m/min. After the lamination process was completed, the material was cooled and the Sample 9 was prepared in order to verify the material properties described herein.

In addition to the Sample 9, a Sample 10 was also prepared. It should be appreciated that the preparation process for the formation of Sample 10 was substantially the same as the preparation process of the Sample 9. The difference lies in that a treatment agent (a mixture of toluene and naphtha) was applied to a binding surface of the mixture sheet at a speed of 15 m/min before the mixture sheet is attached to the nylon cloth for Sample 10, and the mixture sheet was heated in an oven to volatilize the toluene.

With Sample 9 and Sample 10 formed, each of the samples were tested to determine the instant peel strength and over-time peel strength, respectively, of each of the samples. The results of the tests are shown in Table 3. It should be understood that, as provided in Table 3, the term "instant peel strength" refers to the peel strength (N) of the laminated material when it is tested after the lamination is completed. In this test (e.g., the results depicted in Table 3), within 30 minutes after the output of the laminated material, laminated material pieces each with a width of about 3 cm and a length of about 30 cm were cut from different positions of the laminated material in a width direction, respectively. The polymer layer and the fiber layer of each laminated material piece were peeled to form an opening, respectively. The polymer layer and the fiber layer at the opening were then pulled by a tensile testing machine in order to test the average peeling force of the three material pieces, and the average peeling force is taken as the instant peel strength of the corresponding sample.

Furthermore, as provided in Table 3, the term "over-time peel strength" refers to the peel strength (N) of the laminated material tested after a period of time after the lamination is completed. In this test, after 24 hours since the laminated material was produced, laminated material pieces each with a width of about 3 cm and a length of about 30 cm were cut from different positions of the laminated material in a width direction, respectively. The polymer layer and the fiber layer of each laminated material piece were peeled to form an opening, respectively. The polymer layer and the fiber layer at the opening were then pulled by a tensile testing machine in order to test the average peeling force of the three material pieces, and the average peeling force is taken as the age peel strength of the corresponding sample.

**Table 3**

| Serial No. | Instant peel strength (N) | Over-time peel strength (N) |
|---|---|---|
| Sample 9 | 4.5 | 4.5 |
| Sample 10 | 15.4 | 25 |

As can be seen from Table 3, both the instant peel strength and the age peel strength of the sample 10 are greatly improved compared with that of the sample 9. It can also be seen that the peeling resistance of the sample 10 is further improved over time after the lamination process is completed.

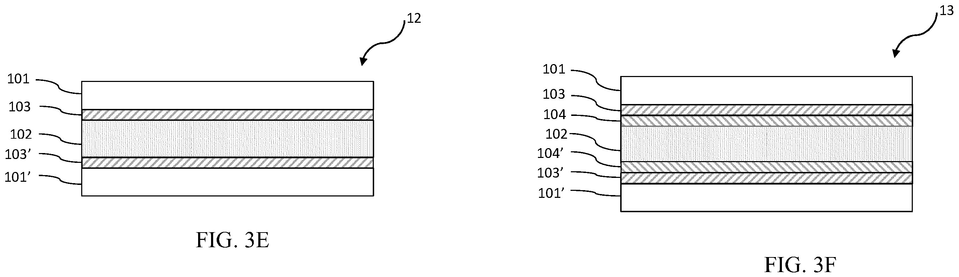

Turning now to FIGS. 3E - 3L, additional embodiments of the laminated material 12 described herein are depicted. For example, with reference to FIG. 3E, in some embodiments, two fiber layers (101, 101') may be attached to one polymer layer 102 to form the laminated material 12. An adhesive layer 103 may be provided between the fiber layer 101 and the polymer layer 102, and an adhesive layer 103' may be provided between the fiber layer 101' and the polymer layer 102.

Turning now to FIG. 3F, in some other embodiments, two fiber layers (101, 101') may be attached to one polymer layer 102 to form the laminated material 13. An adhesive layer 103 may be provided between the fiber layer 101 and the polymer layer 102, and an adhesive layer 103' may be provided between the fiber layer 101' and the polymer layer 102. As further illustrated in FIG. 3F, an intermediate layer 104 may be provided between the polymer layer 102 and the adhesive layer 103, and an intermediate layer 104' may be further provided between the polymer layer 102 and the adhesive layer 103'.

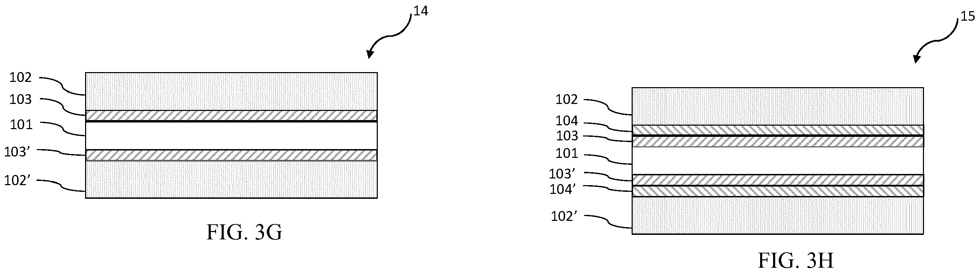

Turning now to FIG. 3G, in some embodiments, one fiber layer 101 may be attached to two polymer layers (102, 102') to form a laminated material 14. An adhesive layer 103 may be provided between the fiber layer 101 and the polymer layer 102, and an adhesive layer 103' may be provided between the fiber layer 101 and the polymer layer 102'.

Referring now to FIG. 3H, in some embodiments, one fiber layer 101 may be attached to two polymer layers (102, 102') to form a laminated material 15. An adhesive layer 103 may be provided between the fiber layer 101 and the polymer layer 102, and an adhesive layer 103' may be provided between the fiber layer 101 and the polymer layer 102'. In these embodiments, an intermediate layer 104 may be further provided between the polymer layer 102 and the adhesive layer 103, and an intermediate layer 104' may be further provided between the polymer layer 102' and the adhesive layer 103'.

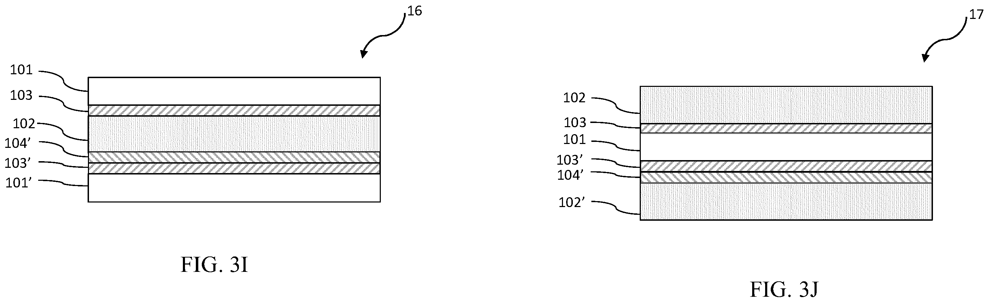

As depicted in FIG. 3I, in some embodiments, two fiber layers (101, 101') may be attached to one polymer layer 102 to form the laminated material 16. An adhesive layer 103 may be provided between the fiber layer 101 and the polymer layer 102, and an adhesive layer 103' may be provided between the fiber layer 101' and the polymer layer 102. In these embodiments, an intermediate layer 104' may be further provided between the polymer layer 102 and the adhesive layer 103'.

With reference now to FIG. 3J, in some embodiments, one fiber layer 101 may be attached to two polymer layers (102, 102') to form a laminated material 17. An adhesive layer 103 may be provided between the fiber layer 101 and the polymer layer 102, and an adhesive layer 103' may be provided between the fiber layer 101 and the polymer layer 102'. In these embodiments, an intermediate layer 104' may be further provided between the polymer layer 102' and the adhesive layer 103'.

It should be understood that the fiber layers of the laminated materials in FIGS. 3E to 3J may be laminated to the corresponding polymer layers, respectively, based on the laminating process described above.

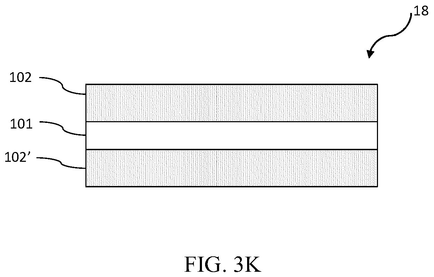

Turning now to FIG. 3K, in some embodiments, one fiber layer 101 may be laminated to two polymer layers (102, 102') to form a laminated material 18. In these embodiments, the fiber layer 101 may include a series of meshes regularly arranged. As illustrated in FIG. 3K, no adhesive layer 103 may be provided between the fiber layer 101 and the polymer layer 102, no adhesive layer 103' may be provided between the fiber layer 101 and the polymer layer 102', and the polymer layers 102 and 102' may be in contact with each other and bonded to each other at the positions of the meshes described above.

In the embodiments depicted in FIG. 3K, the configuration of the polymer layers 102, 102' may be due to the fact that EVA in the polymer layers 102 and 102' may be viscous, and especially after the polymer layers 102 and 102' may be heated and contacted with each other, the two layers can be attached to each other under a certain pressure. It can be understood that the fiber layer 101 may be optionally previously immersed in an adhesive (or a solution thereof) before being attached to the two polymer layers (102, 102'), and in this way, each fiber of the fiber layer may be coated with the adhesive. Therefore, each of the two polymer layers (102, 102') may also be connected to the fiber layer 101 by the adhesive, which enhances the peeling resistance of the layers of the laminated material 18. It should be further understood that in other embodiments, the adhesive may also be applied to the polymer layers 102 and/or 102', and then the polymer layers 102 and 102' may be attached to the fiber layer 101, such that the polymer layers 102 and 102' may be bonded by means of the adhesive in the meshes of the fiber layer 101, which enhances the peeling resistance of the layers of the laminated material 18.

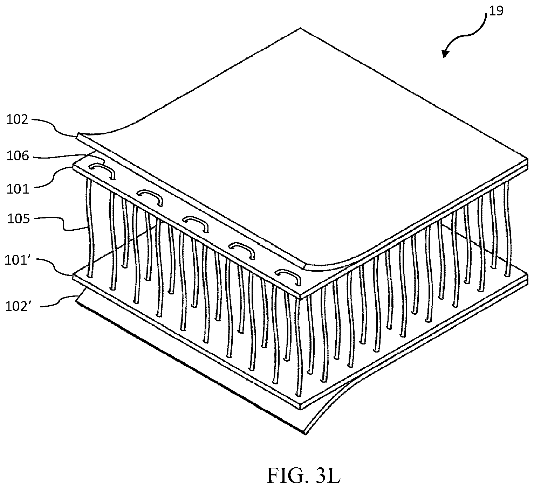

Although the laminated material 12 depicted in FIGS. 3E - 3K may include regular arrangements, it should be appreciated that, in some embodiments, the laminated material 12 may have a more complex structure. For example, with reference to FIG. 3L, a laminated material 19 may include a polymer layer 102, a fabric layer 101, a fabric layer 101', and a polymer layer 102', sequentially. In these embodiments, the fabric layer 101 may be attached to the polymer layer 102 and the fabric layer 101' may be attached to the polymer layer 102'. The fabric layer 101 and the fabric layer 101' may be connected by means of a plurality of threads 105.

As illustrated in FIG. 3L, and for the purpose of clarification, some threads 105 that may be obscured have been omitted from the illustration. However, it should be appreciated that these threads 105 limit the distance between the two fabric layers 101 and 101' when tensioned. For example, these threads 105 may pass through the two fabric layers alternately by sewing and form a plurality of stitches 106 on each of the two fabric layers, and the two fabric layers 101 and 101' may be pulled by the plurality of stitches 106 when the threads 105 may be tensioned. However, it should also be understood that the threads 105 may be fastened to the two fabric layers in other ways without departing from the scope of the present disclosure.

In each of the embodiments described herein and depicted in FIGS. 3A - 3L, it should be appreciated that the threads may be made of polyethylene terephthalate (PET) fibers, polyethylene, polypropylene, nylon, or other tensile materials without departing from the scope of the present disclosure. Furthermore, it should be understood that the fabric layer 101 and the polymer layer 102 may be laminated to each other by the method in any of the above embodiments described herein (e.g., as provided by FIGS. 1, 2, and 4A - 4D), and the fabric layer 101' and the polymer layer 102' may be laminated to each other by the method described in any of the above embodiments.

In view of the foregoing, it should be appreciated that the above describes in detail the various laminated materials provided in the present disclosure and the methods for manufacturing the laminated materials.

It is further noted that the laminated materials in the above embodiments can be used to manufacture a wide variety of products. For example, a producer may conveniently choose to join the separated materials together in a high-frequency welding manner or in a heat fusion manner according to the actual situations. Accordingly, utilizing only existing high-frequency welding production equipment, the producer can use the mixture sheets or the laminated materials provided in the above embodiments to manufacture inflatable products having higher strength and being more environmentally friendly. Thus, the laminated materials and the manufacturing methods thereof disclosed in the present disclosure have a wide range of applications.

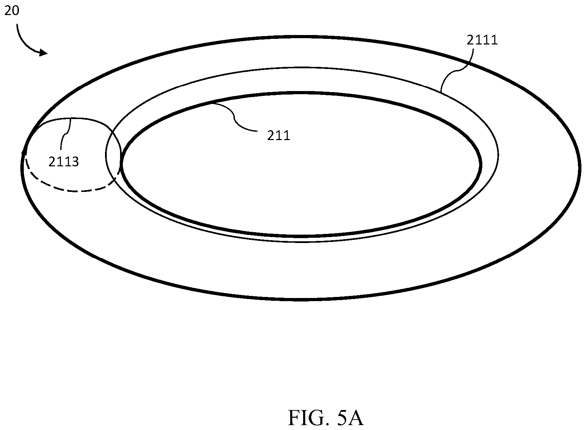

Turning now to FIGS. 5A - 9, it should be understood that, in some embodiments, the laminated materials described herein may be used to manufacture inflatable products. For example, the inflatable products may be inflatable furniture such as inflatable mattresses, inflatable pools, inflatable sofas, inflatable toys such as swimming rings, inflatable castles, or other types of similar products without departing from the scope of the present disclosure. Accordingly, as provided herein, the term "inflatable product" may refer to a product that includes at least one inflatable chamber for inflation.

Furthermore, in the embodiments described herein, the inflatable products may each define an "inflated state" and a "deflated state." For example, after a pressure of gas (e.g., air) in the inflatable chamber reaches a desired value, the inflatable product is in the inflated state and maintains a certain shape. In contrast, after the gas in the inflatable chamber of the inflatable product is discharged, the inflatable product is in the deflated state, such that a volume of the inflatable product is reduced relative to that of the inflatable product in the inflated state, thereby facilitating storage of the inflatable product.

In the embodiments described herein, when the inflatable product includes a simple structure (e.g., such as for a swimming ring or other similar inflatable product), the inflatable product may further include a closed chamber that may be formed by bending a single piece of laminated material and sealing the single piece of laminated material to itself, such that the laminated material serves as an inflatable chamber for the inflatable product. In embodiments in which the inflatable product includes a more complex structure, a closed chamber may be formed by connecting multiple pieces of laminated materials together, such that the multiple pieces of the laminated material serve, collectively, as an inflatable chamber of the inflatable product. In other words, the inflatable chamber of the inflatable product may be made of one piece or several pieces of laminated material.

In the embodiments described herein, it should be understood that, after inflation, the shape of the inflatable chamber of the inflatable product may be maintained only by walls of the inflatable chamber or by the aid of additional internal structures. For example, in some embodiments, the additional internal structure may be one or more tensioning members located within the inflatable chamber, and the one or more tensioning members are connected to one or more walls of the inflatable chamber. Various embodiments of inflatable products will now be described herein with reference to FIGS. 5A - 9.

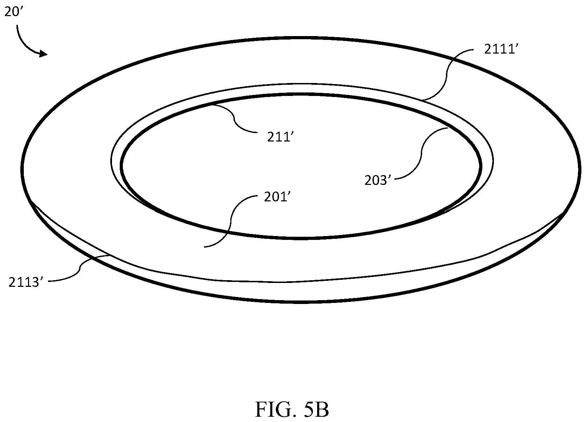

Referring now to FIG. 5A, in an exemplary embodiment, the inflatable product may be a swimming ring 20. In these embodiments, a wall 211 of the swimming ring 20 forms a closed ring and defines an inflatable chamber (not shown) therein. As depicted in FIG. 5A, the wall 211 may be made of a single piece of laminated material. For example, in the embodiment shown in FIG. 5A, the single piece of laminated material is rolled into a substantially cylindrical shape, at which points ends of the laminated material may be joined by heat fusion or high-frequency welding at a welding seam 2111, such that the single piece of laminated material is made into a pipe with both ends unsealed. Subsequently, the two ends of the pipe are joined at a welding seam 2113 by heat fusion or high-frequency welding, which forms the inflatable product illustrated in FIG. 5A. Although the swimming ring 20 of FIG. 5A is noted as including a single piece of laminated material, as described hereinabove, it should be further understood that the swimming ring may be formed of two or more pieces of laminated material, as will be described herein with reference to FIG. 5B.

Turning now to FIG. 5B, in another embodiment, the inflatable product may include a swimming ring 20'. In this embodiment, a wall 21 1' of the swimming ring 20' forms a closed ring and defines an inflatable chamber (not shown) therein. The swimming ring 20' is different from the swimming ring 20 shown in FIG. 5A in that the swimming ring 20' is formed by connecting two laminated materials 201' and 203' that are in a generally circular shape. For example, in these embodiments, an inner peripheral edge of the laminated material 201' and an inner peripheral edge of the laminated material 203' are connected by heat fusion or high-frequency welding to form a welding seam 2111' formed. Similarly, an outer peripheral edge of the laminated material 201' and an outer peripheral edge of the laminated material 203' are also connected by heat fusion or high-frequency welding, to form a second welding seam 2113'

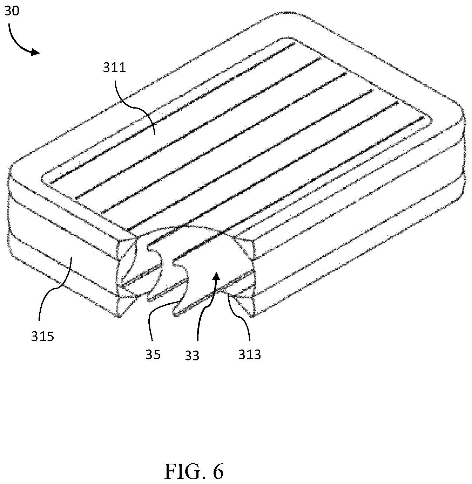

Turning now to FIG. 6, in another embodiment, the inflatable product may include an inflatable mattress 30. The inflatable mattress 30 may include an upper wall 311, a lower wall 313, and a side wall 315. In these embodiments, edges of the upper wall 311 and the lower wall 313 may be welded to upper and lower edges of the side wall 315, respectively, in a high-frequency welding or heat fusion manner, such that the upper wall 311, the lower wall 313, and the side wall 315 together define an inflatable chamber 33. Furthermore, it should be appreciated that the upper wall 311, the lower wall 313 and the side wall 315 may each be made of the laminated material described hereinabove.

As further illustrated in FIG. 6, the structure of the upper wall 311, the lower wall 313 and the side wall 315 may be the same or substantially the same as the structure of one of the laminated materials shown in FIGS. 3A to 3K, respectively. Furthermore, in some embodiments, the inflatable chamber 33 may be provided with a plurality of tensioning members 35 therein. As shown in FIG. 6, the tensioning members 35 may be connected to the upper wall 311 and the lower wall 311 of the inflatable mattress 30, respectively, to limit the deformation of the upper wall 311 and the lower wall 313 after the inflatable mattress 30 is inflated, such that the inflatable mattress 30 maintains a desired shape.

In other embodiments, it should be further appreciated that the upper wall 311 and the lower wall 313 may be provided with the laminated material 19 depicted in the embodiment of FIG. 3L. For example, in this embodiment, the laminated material 19 may be cut into the shape of a mattress, with the polymer layer 102 and the fiber layer 101 forming the upper wall 311, and the polymer layer 102' and the fiber layer 101' forming the lower wall 313. Given the structure of the laminated material 19, in this embodiment, the tensioning member 35 may be omitted. Accordingly, it should be appreciated that the plurality of threads 105 limit the deformation of the upper wall 311 and the lower wall 313 after the inflatable mattress 30 is inflated, such that the inflatable mattress 30 maintains a certain shape.

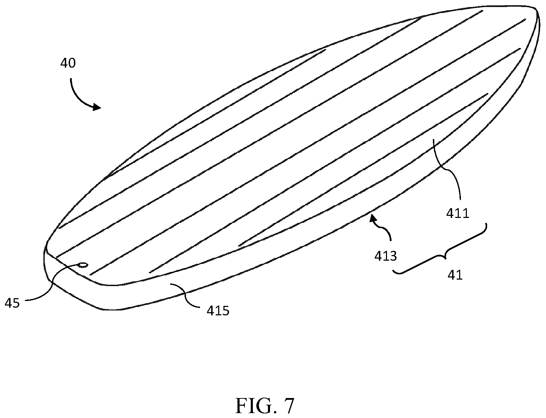

Turning now to FIG. 7, in another embodiment still, the inflatable product may be a stand-up paddle (SUP) board 40. The stand-up paddle board 40 may include a body portion 41 and a lateral confining sheet 415, and the body portion 41 may be formed of the laminated material 19 depicted in the embodiment of FIG. 3L.

For example, in the embodiment of FIG. 7, the laminated material 19 may be cut into the shape of a stand-up paddle board, with the polymer layer 102 and the polymer layer 102' forming a top surface 411 and a bottom surface 413 of the stand-up paddle board, respectively. The lateral confining sheet 415 may then be welded to an edge of the body portion 41 in a high-frequency or heat fusion manner, such that the lateral confining sheet 415 defines an inflatable chamber (not shown) inside the body portion 41. For example, an upper end of the lateral confining sheet 415 may be connected to the polymer layer 102 and a lower end of the lateral confining sheet 415 may be connected to the polymer layer 102'. After inflation, the plurality of threads in the body portion 41 of the stand-up paddle board 40 are tensioned and provide a tensile force to limit the distance between the two fabric layers of the body portion 40, such that the paddle board 40 maintains a desired shape (e.g., the shape of a stand-up paddle board). In some embodiments, the stand-up paddle board may further include an inflation inlet 45, which may be provided on the top surface of the stand-up paddle board in FIG. 7. Furthermore, it should be appreciated that, in some embodiments, the outer side of the laminated material 19 used to form the body portion 41 may be covered with one or more reinforcing layers, with the one or more reinforcing layers forming the top and/or bottom surface of the stand-up paddle board.

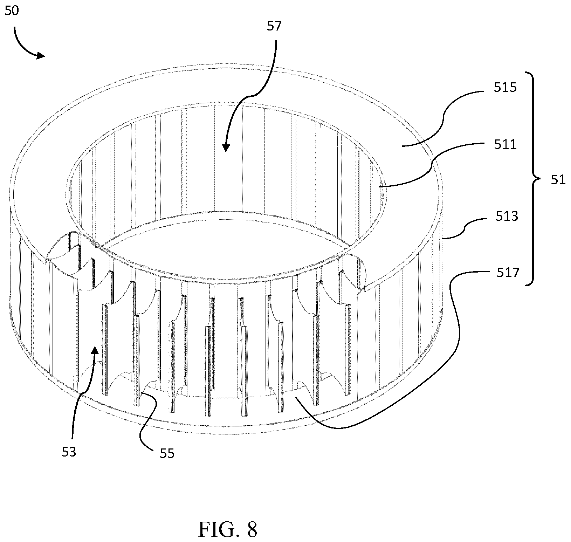

Turning now to FIG. 8, in yet another embodiment, the inflatable product may include an inflatable pool 50. In this embodiment, the inflatable pool 50 comprises a pool wall 51. The pool wall 51 may include an inner wall 511 and an outer wall 513, with an inflatable chamber 53 being defined between the inner wall 511 and the outer wall 513. As shown in FIG. 8, the pool wall 51 may also include a top wall 515 and a bottom wall 517. In these embodiments, the top wall 515may be connected to the upper ends of the inner wall 511 and the outer wall 513, respectively, while the bottom wall 517 may be connected to the lower ends of the inner wall 511 and the outer wall 513, respectively. Furthermore, the top wall 515, the bottom wall 517, the inner wall 511, and the outer wall 513 may define an inflatable chamber 53. For example, in these embodiments, outside air may pass through air passages (which are in communication with the inflatable chamber 53 and an external environment, respectively, not shown) disposed on the pool wall 51 to enter the inflatable chamber 53, such that the inflatable chamber 53 is inflated.

In these embodiments, the pool wall 51 may be composed entirely of the laminated material provided in any of the embodiments described herein. Furthermore, it should be appreciated that, the inner wall 511, the outer wall 513, the top wall 515 and the bottom wall 517 may have the same or substantially the same structure as one of the laminated materials shown in FIGS. 3A to 3K, respectively. Accordingly, in embodiments in which the pool wall 51 includes the structure of one of the laminated materials in FIGS. 3A - 3K, a plurality of tensioning members 55 may also be arranged in the inflatable chamber 53, such that one end of each tensioning member 55 is connected to the inner wall 511, and the other end of each tensioning member 55 is connected to the outer wall 513. In these embodiments, the inner wall 511 and the outer wall 513 are respectively pulled by the tensioning members 55 toward the inflatable chamber 53, such that the pool wall 51 and the inflatable chamber 53 maintain a desired shape. It should be understood that in other embodiments, a part of the pool wall 51 is composed of one or more of the mixture sheets in the above embodiments, and another part of the pool wall 51 is composed of one or more of the laminated materials in the above embodiments.

In other embodiments, the inner wall 511 and the outer wall 513 may be formed of the laminated material 19 corresponding to the embodiment of FIG. 3L. For example, in these embodiments, the laminated material 19 may be cut into a substantially rectangular shape and then connected end to end (e.g., by heat fusion or high-frequency welding) to form a cylinder. Accordingly, in these embodiments, the polymer layer 102 and the fiber layer 101 form the inner wall 511, and the polymer layer 102' and the fiber layer 101' forming the outer wall 513. It should be further understood that, given the complexity of the laminated material 19, the tensioning member 55 described above may be omitted, as the plurality of threads 105 limit the deformation of the inner wall 511 and the outer wall 513 after the inflatable pool 50 is inflated, such that the inflatable pool maintains a certain shape.

In the embodiments described herein (e.g., with reference to FIGS. 5A - 8), it should be further understood that the inflatable chamber of the inflatable product may be further provided with a filler which is enclosed within the inflatable chamber. The filler within the inflatable chamber may be made of an elastic and porous material. For example, in some embodiments, the elastic and porous material may include at least one of expandable polyethylene (EPE), sponge, silk cotton, and three-dimensional fabric, or a combination of one or more of these materials.

Furthermore, in the embodiments described herein, it should be appreciated that (e.g., during transportation of the inflatable product), gas (e.g., air) in the inflatable chamber is withdrawn so that the inflatable chamber (with the filler enclosed therein) is compressed by outside atmospheric pressure. In other instances (e.g., when a user unfolds the inflatable product and prepares it for use), the inner space of the inflatable chamber is in communication with the outside atmosphere, and the filler made of the elastic and porous material pushes against the walls of the inflatable chamber to unfold them, while the outside air is sucked inside the inflatable chamber and enters pores of the filler. In this way, the volume of the inflatable product is reduced after being deflated to facilitate transportation of the inflatable product. Furthermore, after being unfolded, the inflatable product may automatically expand and draw in air with the help of the filler.

It should be further noted that the mixture sheet described herein may be used to manufacture any of the inflatable products described above. These inflatable products (e.g., those formed of the mixture sheet) differ from the inflatable products described above (e.g., those formed of the laminated material) in that part or all of the laminated material used to form the inflatable chamber is replaced with the mixture sheet. For example, in some embodiments in which the mixture sheet is used to form the inflatable product, a single mixture sheet may be bent and sealed to form a closed chamber, which may serve as an inflatable chamber of the inflatable product. In other embodiments in which the mixture sheet is used to form the inflatable product, a plurality of mixture sheets may be interconnected to form a closed chamber, which may serve as an inflatable chamber of the inflatable product.

Furthermore, in other embodiments still, it should be appreciated that the inflatable products described herein may include both mixture sheets and laminated materials. For example, one or more mixture sheets and one or more pieces of laminated material may be connected to form a closed chamber, and the closed chamber may serve as the inflatable chamber of the inflatable product.

More particularly, and in view of the foregoing, it should be understood that the walls of the swimming ring illustrated in FIGS. 5A and/or 5B may be made from one of the mixture sheets described above. Similarly, the upper wall 311, the lower wall 313, and the side wall 315 of the inflatable mattress 30 illustrated in FIG. 6 may each be made from one or more of the mixture sheets described above. In these embodiments, the inflatable chamber 33 is provided with a plurality of tensioning members 35, which are connected to the upper wall 311 and the lower wall 313 of the inflatable mattress 30, respectively, to limit the deformation of the upper wall 311 and the lower wall 313 after the inflatable mattress 30 is inflated, such that the inflatable mattress maintains a desired shape.

Referring again to FIG. 7, it should be further understood that the top surface 411, the bottom surface 413, and the lateral confining sheet 415 of the stand-up paddle board 40 may be made from one or more of the mixture sheets described above. The top surface 411, the bottom surface 413, and the lateral confining sheet 415 together may define an inflatable chamber (not shown), and a plurality of tensioning members (not shown) may also be provided in the inflatable chamber, which are connected to the top surface 411 and the bottom surface 413, respectively, to limit the deformation of the top surface 411 and the bottom surface 413 after the stand-up paddle board 40 is inflated, so that the stand-up paddle board maintains a desired shape.

Similarly, referring again to FIG. 8, it should be appreciated that the pool wall 51 of the inflatable pool 50 may, in some embodiments, be formed of the mixture sheets described herein. However, in other embodiments, the pool wall 51 may be formed of one or more of the mixture sheets in the above embodiments, and another part of the pool wall 51 is composed of one or more of the laminated materials in the above embodiments.

Although the mixture of LLDPE and EVA, the mixture sheet and the laminated material disclosed herein are described as being used to form inflatable products, it should be understood that these sheets and materials may also be used to manufacture products other than inflatable products without departing from the scope of the present disclosure.

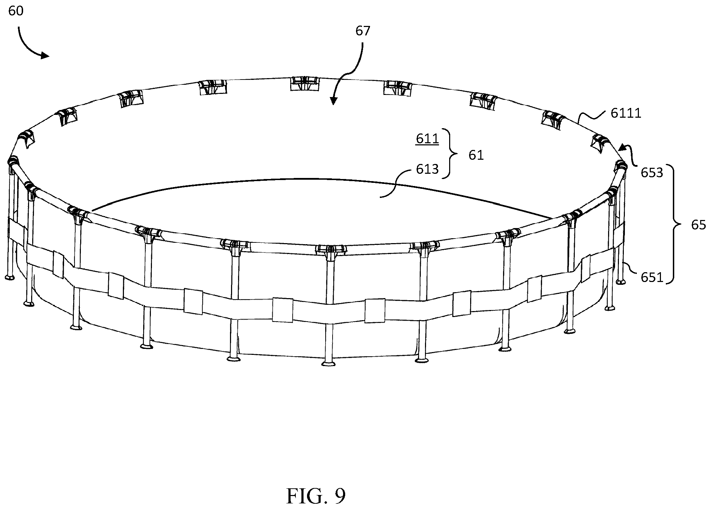

Turning now to FIG. 9, it should be further appreciated that any of the laminated materials in the corresponding embodiments of FIGS. 3A to 3K described above may be used to manufacture an above-ground pool 60.

For example, as illustrated in FIG. 9, the above-ground pool 60 may include a liner 61 and a supporting assembly 65, with the liner 61 being detachably mounted to the supporting assembly 65. In these embodiments, the upper portion of the liner 61 is fixed to the upper portion of the supporting assembly 65, which may be used to limit the shape of the liner 61. The liner 61 may further define a water cavity 67, and the water cavity 67 may be used for containing water.

In the embodiments depicted in FIG. 9, the supporting assembly 65 may also be from a series of rods. For example, the supporting assembly may include a plurality of vertical rods 651 and a plurality of horizontal rods 653, with the plurality of vertical rods 651 and the plurality of horizontal rods 653 being connected to one another to form the supporting assembly 65 in the form of a frame. In these embodiments, each vertical rod 651 may be arranged vertically or substantially vertically, and each horizontal rod 653 may be arranged horizontally or substantially horizontally.

Furthermore, the liner 61 depicted in FIG, 9 may also include a confining sheet 611 and a bottom sheet 613. The confining sheet 611 and the bottom sheet 613 may each be made of one of the laminated materials described above, and the confining sheet 611 may be connected to the bottom sheet 613 by heat fusion, high-frequency welding, or other optional means. The confining sheet 611 may also be hung on the plurality of horizontal rods 653 such that the upper portion of the liner 61 is fixed to the upper portion of the supporting assembly 65.

For example, in the embodiments depicted in FIG. 9, the upper portion of the confining sheet 611 may be bent toward the inside or outside of the water cavity 67 to form a series of sleeves 6111, and each horizontal rod 653 may pass through one of the sleeves 6111, such that the plurality of horizontal rods 653 hold up the upper portion of the confining sheet 611 through these sleeves 6111. In other embodiments not depicted, it should be understood that one horizontal rod 653 may pass through a plurality of sleeves 6111, or a plurality of horizontal rods 653 may pass through one same sleeve 6111. In any of the embodiments described herein, the liner 61 can be conveniently folded and stored after the supporting assembly 65 is removed. Furthermore, as described hereinabove, the confining sheet 611 and the bottom sheet 613 may each be made of a single piece of laminated material. For ease of production, the confining sheet 611 and/or the bottom sheet 613 may be formed by connecting two or more pieces of laminated material (e.g., by heat fusion or high-frequency welding).

It should be further understood that, in the embodiment depicted in FIG. 9, the liner may be formed via any of the methods and using any of the materials (e.g., laminated materials and/or mixture sheets) described herein. For example, the liner 61 may be formed by bending a single piece of laminated material. In another embodiment, the liner 61 may be formed from two or more pieces of laminated material, while one of the pieces of laminated material used to make the liner 61 is a portion of the confining sheet 611 and a portion of the bottom sheet 613.

Furthermore, referring still to FIG. 9, in some embodiments, some or all of parts in the supporting assembly 65 are in a form other than rods. For example, some or all of the vertical rods 651 may be replaced with plate members disposed vertically or substantially vertically, and these plate members may further provide support for the liner 61 from the sides of the liner 61. As another example, some or all of the horizontal rods 653 may be omitted.

In other embodiments still, the mixture sheet described hereinabove may be used for manufacturing the above-ground pool 60 depicted in FIG. 9. This above-ground pool may have the same or substantially the same structure as the above-ground pool described above. However, in embodiments in which the above-ground pool is formed of the mixture sheets, the laminated material of the liner 61 is replaced with the mixture sheet. In these embodiments, the liner 61 is made entirely of one or more of the mixture sheets, or a part of the liner 61 may be composed of one or more of the mixture sheets, while another part of the liner 61 is composed of one or more of the laminated materials.

In view of the foregoing, it should be appreciated that the present disclosure relates to a material containing a mixture of EVA and LLDPE that may be used for forming inflatable products. This material and its products have low-temperature resistance, weather fastness and durability superior to the PVC material, and is more environmentally friendly than the PVC material. Moreover, this material is adapted to both high-frequency welding and heat fusion processing, thereby providing a wide range of application prospects.

Furthermore, it should be apparent that the present disclosure is not limited to the details of the above-mentioned exemplary embodiments, and the present disclosure can be implemented in other specific forms without departing from the spirit or basic features of the present disclosure. Therefore, no matter from which point of view, the embodiments should all be regarded as exemplary and non-limiting. The scope of the present disclosure is defined by the appended claims rather than the above-mentioned description, and therefore it is intended that all changes which fall within the meaning and range of equivalents of the claims are embraced in the present disclosure. Any reference signs in the claims should not be construed as limiting the claims involved. In addition, it is apparent that the word "comprise/include" does not exclude other elements or steps, and the singular does not exclude the plural. The terms first, second, etc. are used for designations and do not represent any particular order.

It should be understood that the embodiments as shown in the drawings only show the optional shapes, sizes and arrangements of optional components of the sheet, laminated materials, and inflatable products according to the present disclosure, which are merely illustrative but not restrictive, and other shapes, sizes and arrangements may be employed without departing from the idea and scope of the present disclosure.

The technical contents and technical features of the present disclosure are disclosed above, but it can be understood that those skilled in the art would have made various variations and improvements to the concepts disclosed above under the creative idea of the present disclosure, and all the variations and improvements fall into the scope of protection of the present disclosure. The descriptions of the above embodiments are illustrative but not restrictive, and the scope of protection of the present disclosure is determined by the claims.

## Claims

1. A sheet comprising:
a mixture of linear low-density polyethylene and ethylene-vinyl acetate copolymer, the mixture having 15-75 parts by weight of linear low-density polyethylene and 25-85 parts by weight of ethylene-vinyl acetate copolymer;
wherein a mass percentage of vinyl acetate in the ethylene-vinyl acetate copolymer ranges from 5% to 40%.

2. The sheet according to claim 1, wherein the mass percentage of vinyl acetate in the ethylene-vinyl acetate copolymer is 10-35%; and/or the linear low-density polyethylene is 20-70 parts by weight; and/or the ethylene-vinyl acetate copolymer is 30-80 parts by weight, and/or the mixture further comprises one or more of an antioxidant, a lubricant or a filler.

3. The sheet according to claim 2, wherein the antioxidant is 0-1 part by weight; and/or the lubricant is selected from oleamide; and/or the lubricant is 0-1 part by weight; and/or the filler is selected from calcium carbonate nanoparticles; and/or the filler is 5-25 parts by weight.

4. The sheet according to claim 2, wherein the mixture of linear low-density polyethylene and ethylene-vinyl acetate copolymer comprises:
the linear low-density polyethylene at 20-70 parts by weight;
the ethylene-vinyl acetate copolymer at 30-80 parts by weight;
the antioxidant at 0-1 parts by weight; and
the lubricant at 0-1 parts by weight;

5. A laminated material, comprising:
a fabric layer including a first fabric layer side and a second fabric layer side; and
a polymer layer attached to the first fabric layer side of the fabric layer, the polymer layer including a sheet according to claim 1.

6. The laminated material according to claim 5, wherein the laminated material further comprises:
an adhesive layer disposed between the fabric layer and the polymer layer.

7. The laminated material according to claim 6, wherein the adhesive layer comprises polyurethane.

8. The laminated material according to claim 6, wherein the laminated material further comprises:
an intermediate layer, disposed between the adhesive layer and the polymer layer, the intermediate layer comprising a hydrocarbon, preferably the hydrocarbon has 5, 6, 7 or 8 carbon atoms.

9. The laminated material according to claim 8, wherein the hydrocarbon comprises an alkane or an olefin.

10. The laminated material according to claim 5, wherein the fabric layer is a first fabric, and wherein the laminated material further comprises:
a second fabric layer, comprising a first layer side and a second layer side, wherein the first layer side of the second fabric layer is disposed opposite the second fabric layer side of the first fabric layer.

11. The laminated material according to claim 10, wherein the polymer layer is a first polymer layer and further comprising
a second polymer layer, attached to the second layer side of the second fabric layer; and
wherein at least one of the first polymer layer or the second polymer layer further include the sheet according to claim 1.

12. The laminated material according to claim 10 or 11, further comprising a plurality of threads sewn to the first fabric layer and the second fabric layer such that the plurality of threads limits the distance between the first fabric layer and the second fabric layer.

13. A method for manufacturing a laminated material, comprising the following steps:
preparing a polymer layer, preferably comprising a sheet according to claim 1;
preparing a fabric layer;
forming an intermediate layer on a first polymer layer side of the polymer layer, the intermediate layer comprising a hydrocarbon;
applying an adhesive to a first fabric layer side of the fabric layer to form an adhesive layer; and
covering a surface of the adhesive layer with the intermediate layer, such that the polymer layer is attached to the fabric layer
wherein the laminated material defines a sheet having a mixture of linear low-density polyethylene and ethylene-vinyl acetate copolymer, the mixture having 15-75 parts by weight of linear low-density polyethylene and 25-85 parts by weight of ethylene-vinyl acetate copolymer, and a mass percentage of vinyl acetate in the ethylene-vinyl acetate copolymer ranges from 5% to 40%.

14. The method according to claim 13, wherein the step of forming an intermediate layer on a first side of the polymer layer further comprises:
preparing a solution, the solution comprising an organic , preferably toluene, and a hydrocarbon, and the hydrocarbon having 5, 6, 7 or 8 carbon atoms, preferably an alkane or an olefin;
applying the solution to the first polymer layer side of the polymer layer; and
volatilizing the organic solvent such that the intermediate layer is formed on the first polymer layer side of the polymer layer by the hydrocarbon.

15. The method according claim 14, wherein the method step of volatilizing the organic solvent further comprises:
heating the polymer layer to volatilize the organic solvent.

16. An inflatable product comprising:
a wall defining an inflatable chamber and comprising:
a sheet comprising:
a mixture of linear low-density polyethylene and ethylene-vinyl acetate copolymer, the mixture having 15-75 parts by weight of linear low-density polyethylene and 25-85 parts by weight of ethylene-vinyl acetate copolymer; or
a laminated material comprising:
a fabric layer including a first fabric layer side and a second fabric layer side; and
a polymer layer attached to the first fabric layer side of the fabric layer,
the polymer layer including the sheet;
wherein a mass percentage of vinyl acetate in the ethylene-vinyl acetate copolymer in the sheet ranges from 5% to 40%.

17. The inflatable product according to claim 16, wherein the inflatable product comprises one of an inflatable paddle board, an inflatable pool, an inflatable mattress, or an inflatable toy.

18. An above-ground pool comprising:
a supporting assembly; and
a liner, detachably mounted to the supporting assembly and defining a water cavity;
wherein the liner comprises:
a sheet according to claim 1.
